# EUROPÄISCHE PATENTANMELDUNG

(11) **EP 1 974 804 A2**
(43) Veröffentlichungstag der Anmeldung: **01.10.2008**
(21) Anmeldenummer: 07013546.2
(22) Anmeldetag: 11.07.2007
(51) Int. Cl.: B01F 7/00, B05C 17/005

(54) **Vorrichtung zum Vermischen einer Binder- und einer Härter-Komponente zur Herstellung einer gebrauchsfertigen Spachtelmasse**

(30) Priorität: 29.03.2007 DE 202007004570 U
(71) Anmelder: VOSSCHEMIE GmbH, 25436 Uetersen (DE)
(72) Erfinder: Voss, Klaus-W., 25436 Uetersen (DE)
(74) Vertreter: Richter, Werdermann, Gerbaulet & Hofmann

(57) **Zusammenfassung**

Die Mischvorrichtung zum Vermischen von einer Binder-Komponente (A) und einer Härter-Komponente (B) zu einem pastösen oder flüssigen Mischgut für ein Gerät (100) zur Herstellung einer gebrauchsfertigen Spachtelmasse für die Verspachtelung von Oberflächen von Fahrzeugkarosserien, umfasst einen hohlzylinderartigen Statorteil (16) und einen in diesem konzentrisch um seine Längsachse (20) drehbar aufgenommenen Rotorteil (19), wobei die Mischkammer (14) zwischen dem Statorteil (16) und dem Rotorteil (19) ringspaltartig ausgebildet ist, und sich mehrere am Statorteil (16) angeformte erste Mischzähne (23) radial nach innen und mehrere am Rotorteil (19) angeformte zweite Mischzähne (24) radial nach außen in eine Mischkammer hinein erstrecken, um vermittels einer Rotationsbewegung des Rotorteils (19) im Statorteil (16) die Mischzähne (23, 24) gegeneinander zu bewegen und eine Vermischung der Komponenten (A, B) zu schaffen, und wobei die Zuführung der Komponente (A) und der Komponente (B) vermittels Steuereinrichtungen zur Mischkammer derart erfolgt, dass die Komponente (B) mit einem geringen Vorlauf oder einer Vor-Einspritzung gegenüber der Zuführung der Komponente (A) der Mischkammer zugeführt wird und wobei die ersten Mischzähne (23) auf zumindest einer ersten Mischzahnebene (10) und die zweiten Mischzähne (24) auf zumindest einer zweiten Mischzahnebene (11) angeordnet sind, und die Mischzahnebenen (10, 11) axial in Richtung der Längsachse (20) etagenartig zueinander versetzt sind, sodass die zweiten Mischzähne (24) des Rotorteils (19) in den jeweiligen Zwischenräumen der ersten Mischzähne (23) des Statorteils (16) radial umlaufen und dass wenigstens sechs Mischzahnebenen (10, 11) am Rotorteil (19) und/oder am Statorteil (16) vorgesehen sind, wobei bevorzugt die Anzahl der Mischzahnebenen (10, 11) am Rotorteil (19) und am Statorteil (16) gleich sind.

## Beschreibung

Die vorliegende Erfindung betrifft eine Vorrichtung zum Vermischen von zumindest zwei Komponenten, insbesondere von einer Binder-Komponente und einer Härter-Komponente zu einem pastösen oder flüssigen Mischgut, gemäß dem Oberbegriff des Anspruches 1.

Derartige Vorrichtungen zur Vermischung von zumindest zwei Komponenten finden beispielsweise bei der Herstellung von Spachtelmassen Anwendung, wobei eine Härter-Komponente mit einem 1...2%igen Anteil einer Binder-Komponente zugemischt wird, um eine aushärtbare Spachtelmasse zu erzeugen. Die Mischvorrichtung weist zur Zufuhr der jeweiligen Komponenten Eintrittsöffnungen auf, über welche die Komponenten in die Mischkammer zugegeben werden. Die Komponenten sind in vorgeschaltenen Aufnahmebehältern wie Kartuschen oder Ähnlichem bevorratet, wobei die Mischvorrichtung Teil einer Einrichtung zur Bereitstellung von Spachtelmassen ist.

Eine derartige Vorrichtung zur Herstellung einer gebrauchsfertigen Spachtelmasse für die Verspachtelung von Oberflächen, welche beispielsweise Fahrzeugkarosserien betreffen, ist aus der DE 203 07 518 U1 bekannt. Die Vorrichtung hat zwei an einer Basisstation angeordnete Vorratsbehälter, von denen der eine mit einer Binder-Komponente, nämlich einer Spachtelmasse-Komponente, und der andere mit einer Härter-Komponente befüllt ist. Mit Hilfe einer Dosiereinrichtung werden die beiden Komponenten jeweils über einen Zufuhrkanal kontinuierlich einer Mischkammer zugeführt, in der die Komponenten miteinander in Kontakt geraten. Die Mischkammer ist aus einem Schlauchabschnitt eines flexiblen Schlauches gebildet, an dem außenseitig Presswalzen angreifen, die den Schlauchabschnitt zusammendrücken und gleichzeitig um eine Längsachse umlaufend antreiben. Durch die dabei auftretende Reibung und die Adhäsion der Komponenten an der Innenwand des Schlauches werden die Komponenten miteinander vermischt. Nachdem das Mischgut den Schlauchabschnitt durchlaufen hat, gelangt es zu einer an dem Schlauch vorgesehenen Austrittsöffnung, an der es kontinuierlich aus dem Schlauch austritt. Die Schlauchwand besteht aus einem luftdichten Kunststoff, so dass die dem Schlauch umgebende Luft während des Mischprozesses nicht in das Mischgut gelangen und in diesem in Form von Poren oder Lunkern eingeschlossen werden kann.

Durch die EP 1 627 690 A ist eine Klebstoffpistole zum Auftragen, insbesondere eines Zweikomponentenklebers bekannt, die in einfacher Weise eine breite Spanne von Mischungsverhältnissen zwischen einer relativ zähen Klebstoffkomponente und einer relativ flüssigen Klebstoffkomponente in einer Klebstoffpistole ermöglicht. Diese Klebstoffpistole umfasst einen ersten zylindrischen Behälter, der mit einem ersten Kolben zum Pressen einer relativ zähen Klebstoffkomponente aus einem ersten zylindrischen Behälter versehen ist, einen zweiten zylindrischen Behälter, der mit einem zweiten Kolben zum Pressen einer relativ flüssigen Klebstoffkomponente aus dem zweiten zylindrischen Behälter versehen ist, eine Mischeinheit, in die der erste zylindrische Behälter und der zweite zylindrische Behälter münden, und Antriebsmittel zum Bewegen des ersten und des zweiten Kolbens, wobei die Antriebsmittel für eine größere Geschwindigkeit des ersten Kolbens, als der Geschwindigkeit des zweiten Kolbens ausgelegt sind, wobei der erste zylindrische Behälter einen größeren Innendurchmesser aufweist, als der zweite zylindrische Behälter.

Die EP 1 570 805 A offenbart eine Vorrichtung zur Erzeugung eines Gemisches aus mehreren Komponenten, insbesondere für zahnmedizinische Zwecke: Diese Vorrichtung umfasst mindestens zwei Kartuschen, wobei jede Kartusche eine Komponente des Gemisches aus mehreren Komponenten und einen Kolben enthält, der zum Hinauspressen der Komponente aus der Kartusche eingerichtet ist und eine Antriebsvorrichtung für die Kolben, in der die Antriebsgeschwindigkeit einstellbar ist, wobei die Antriebsvorrichtung einen Schrittmotor aufweist. Bei niedrigen Drehzahlen pro Minute soll der Schrittmotor ein höheres Drehmoment im Vergleich zu bekannten Gleichstrommotoren bieten, während er auch hohe Drehzahlen pro Minute zur Verfügung stellt, wenn auch mit vergleichsweise geringem Drehmoment, was für einen schnellen Vortrieb und Rückzug der Kolben ausreicht.

Die US 6 499 630 B offenbart eine Anordnung zum verhältnisgleichen Ausbringen von zwei oder mehr fließfähigen Substanzen, aus zwei oder mehr Spritzen, von denen zumindest eine auch allein oder in Verbindung mit anderen Spritzen benutzt wird, insbesondere für Dentalzwecke. Nach dieser Anordnung ist vorgesehen, dass sowohl die Spritzenkörper als auch die Spritzenkolben unabhängig von der jeweiligen Kolbenstellung in Vorschubrichtung starr durch lösbare Kupplungseinrichtungen miteinander gekuppelt werden können. Die Kupplungseinrichtungen sind dabei so ausgebildet, dass die Kolben und/oder die Spritzenkörper in beliebiger Relativstellung zueinander in Vorschubrichtung verbunden werden können. Diese Anordnung sieht ferner vor, dass die Spritzenkörper nur in einer vorbestimmten Relativstellung, die den Kolben zugehörigen Kolbenstangen aber in einer beliebigen relativen Stellung miteinander kuppelbar sind.

In der Praxis hat sich jedoch gezeigt, dass die mit der Vorrichtung angemischte Spachtelmasse gelegentlich noch Inhomogenitäten aufweist. Wenn die Spachtelmasse an der Oberfläche einer Fahrzeugkarosserie verspachtelt wird, härtet die Spachtelmasse an den Stellen, an denen keine Härter-Komponente vorhanden ist, nicht aus. Die Beseitigung derartiger Fehlstellen ist mit einem relativ großen Aufwand verbunden, da die Spachtelmasse durch Schleifen von der Karosserie abgetragen und danach die Karosserie erneut verspachtelt werden muss. Wenn derartige Fehlstellen bei einer Reparatur unbemerkt bleiben und die Karosserie danach lackiert wird, wird es sogar erforderlich, die Stelle neu zu lackieren. Bleibt die Mischvorrichtung längerfristig außer Gebrauch, kann ein Eintrocknen der Spachtelmasse insbesondere im Endbereich des Schlauches erfolgen, was zur Unbrauchbarkeit der Vorrichtung führt. Darüber hinaus ist der Schlauch einem erheblichen Verschleiß ausgesetzt, da während des Betriebes der Vorrichtung in den Schlauch eine erhebliche Walkarbeit eingebracht wird. Weiterhin ist die Vorrichtung aufgrund der Presswalzen bzw. -rollen sehr aufwendig und platzintensiv.

Ein weiterer Nachteil ist darin zu sehen, dass die Zugabe der Härter-Komponente zumindest mittels einer Sichtkontrolle nicht möglich ist, so dass nicht sichergestellt ist, dass eine kontinuierliche Zufuhr der Härter-Komponente in die Binder-Komponente erfolgt. Eventuelle Massenanteile der Binder-Komponente, welche nicht mit der Härter-Komponente vermengt sind, können nicht identifiziert werden, wobei durch die lediglich einfache Zufuhr der Härter-Komponente über ein innenliegendes Zufuhrrohr unsicher ist, ob Luftblasen in der Härter-Komponente auftreten.

Es ist daher die Aufgabe der vorliegenden Erfindung, eine Vorrichtung zur Vermischung von zumindest zwei Komponenten zu einem Mischgut zu schaffen, welche eine einfache Konstruktion aufweist und eine homogene Vermischung einer Binder-Komponente mit einer Härter-Komponente sicherstellt, wobei das Mischgut zuverlässig und vollständig aushärten soll, um eine Spachtelmasse ohne Lufteinschlüsse zu erhalten.

Diese Aufgabe wird ausgehend von einer Vorrichtung gemäß dem Oberbegriff des Anspruchs 1 in Verbindung mit dessen kennzeichnenden Merkmalen gelöst.

Vorteilhafte Weiterbildungen der Erfindung sind in den abhängigen Ansprüchen angegeben.

Die Erfindung schließt die technische Lehre ein, dass der Mischer der Vorrichtung einen hohlzylinderartigen Statorteil und einen in diesem konzentrisch um eine Längsachse drehbar aufgenommenen Rotorteil aufweist und die Mischkammer zwischen dem Statorteil und dem Rotorteil ringspaltartig ausgebildet ist, wobei sich mehrere am Statorteil angeformte erste Mischzähne radial nach innen und mehrere am Rotorteil angeformte zweite Mischzähne radial nach außen in die Mischkammer hinein erstrecken, um vermittels einer Rotationsbewegung des Rotorteils im Statorteil die Mischzähne gegeneinander zu bewegen und eine Vermischung der beiden Komponenten zu schaffen, wobei der Statorteil mindestens eine, bevorzugterweise zwei mit der Mischkammer verbundene Eintrittsöffnungen für die Härter-Komponente aufweist.

Die Zuführung der Binder-Komponente und der Härter-Komponente mittels einer Steuereinrichtung zur Mischkammer erfolgt bevorzugt derart, dass vor Beginn eines jeden Mischprozesses vor dem Zulauf der Binder-Komponente bzw. vor Beginn des kontinuierlichen Mischprozesses mit der Drehbewegung der gegeneinanderlaufenden Mischzähne des Mischers eine Menge von 0,1 Gramm bis 0,5 Gramm, bevorzugterweise 0,2 Gramm pastöse oder flüssige Härter-Komponente in die Mischkammer eingespritzt wird, woraufhin der Zulauf der Binder-Komponente und der Zulauf der Härter-Komponente erfolgt.

Die Erfindung geht dabei von dem Gedanken aus, dass der Mischer der Vorrichtung als eine Einheit von zwei Bauteilen, nämlich dem Statorteil und dem Rotorteil, ausgebildet ist. Die Binder-Komponente und die Härter-Komponente werden über die jeweiligen Eintrittsöffnungen in die Mischvorrichtung eingebracht, und geraten unmittelbar in die Mischkammer. Aufgrund der Rotationsbewegung des Rotorteils im ruhenden Statorteil drehen sich die zweiten Mischzähne, wo hingegen die ersten Mischzähne ruhen. Damit wird eine Scherung bzw. Teilung in das Mischgut eingebracht, so dass die Härter-Komponente mit der Binder-Komponente zuverlässig vermengt wird. Die ersten Mischzähne weisen zumindest eine erste Mischzahnebene und die zweiten Mischzähne zumindest eine zweite Mischzahnebene auf. Die Mischzahnebenen sind axial in Richtung der Längsachse etagenartig zueinander versetzt, so dass die zweiten Mischzähne des Rotorteils in den jeweiligen Zwischenräumen der ersten Mischzähne des Statorteils radial umlaufen. Insgesamt können von den ersten Mischzähnen des Statorteils wenigstens sechs Mischzahnebenen vorgesehen sein, so dass in den jeweiligen Zwischenräumen die zweiten Mischzähne des Rotorteils auf insgesamt sechs Mischzahnebenen angeordnet sind. Das Mischgut durchläuft dabei von der Eintrittsöffnung bis zur Abgabeöffnung die insgesamt sechs Mischzahnebenen der ersten Mischzähne sowie die sechs Mischzahnebenen der zweiten Mischzähne. Auf diese Weise wird die Teilungswirkung erheblich vergrößert und eine bessere Durchmischung der Komponenten erzielt.

Vorteilhafterweise ist die Abgabeöffnung als radialer Auslass an einem Seitenwandabschhnitt des Statorteils ausgeführt, wobei die Abgabeöffnung bevorzugt kreisförmig ausgeführt ist und/oder radial mit Bezug zur Normalen seitlich versetzt zu dieser auf der Mantelfläche des Statorteils (16) zur Seite weisend angeordnet ist. Auf diese Weise wird eine definiertere Abgabe des Mischgutes erreicht.

Über die Abgabeöffnung tritt das Mischgut aus der Mischkammer wieder aus, wobei die Abgabeöffnung fernseitig von den Eintrittsöffnungen angeordnet ist, so dass das Mischgut die gesamte ringspaltartige Mischkammer durchläuft. Die Strömungsbewegung des Mischgutes wird durch eine Druckbeaufschlagung der jeweiligen Vorratsbehälter der Komponenten erzeugt, so dass die Komponenten durch die jeweiligen Eintrittsöffnungen in die Mischkammer hineingedrückt werden. Basierend auf dem Druck bzw. dem Strömungsquerschnitt der jeweiligen zugegebenen Komponenten wird das Mischungsverhältnis bestimmt. Die Zuführung der Binder-Komponente und der Härter-Komponente zur Mischkammer wird vermittels einer Steuereinrichtung vorgenommen, die jedoch noch eine weitere Aufgabe hat.

Die Größe der Abgabeöffnung ist bevorzugt dabei so definiert, dass 100 g einer gebrauchsfertige Spachtelmasse im Wesentlichen in 10 s abgegeben werden. Besonders bevorzugt beträgt der Durchmesser einer kreisförmigen Abgabeöffnung 10mm. Hierdurch lässt sich eine bessere Durchmischung der Komponenten erreichen.

Vor Beginn eines jeden Mischprozesses wird vor dem Zulauf der Binder-Komponente bzw. vor Beginn des kontinuierlichen Mischprozesses mit der Drehbewegung der gegeneinander laufenden Mischzähne des Mischers eine Menge von 0,1 Gramm bis 0,5 Gramm, bevorzugterweise 0,2 Gramm pastöse oder flüssige Härter-Komponente in die Mischkammer eingespritzt, woraufhin der Zulauf der Binder-Komponente und der Zulauf der Härter-Komponente erfolgt.

Und diese Einspritzung einer kleinsten Menge an Härter-Komponente wird ebenfalls von der Steuereinrichtung ausgelöst und überwacht. Durch das Einspritzen bzw. Injizieren einer kleinen Menge an pastöser oder flüssiger Härter-Komponente vor oder bei Beginn eines jeden kontinuierlichen Mischprozesses in die Mischkammer der Vorrichtung werden fehlerhafte Mischergebnisse vermieden, denn ohne diese Vorab-Injizierung kommt es immer zu fehlerhaften Mischergebnissen. Das liegt daran, dass das Mischungsverhältnis bis 2 % zu 98 % von Binder-Komponente und Härter-Komponente beträgt. Die Erstmenge, die etwa 1 cm³ beträgt, enthält dann entweder gar keinen Härter oder eine so stark reduzierte Menge an Härter, dass es zu mangelhaften Aushärtungen partiell kommen kann. Ein brauchbares Härtungsergebnis wird deshalb mit einem Benzoylperoxid-Anteil (50 %ige Paste) zwischen 0,8 % bis 5 % erreicht. Wird dieser Mengenanteil in Über- oder Unterdosierung nicht eingehalten, dann entstehen Qualitäts-Probleme beim Mischgut. Die Unterdosierung führt zu nicht ausreichender Endhärte. Die Überdosierung führt zu einer unerwünschten Anreicherung der Binder-Komponente (Spachtelmasse) mit Weichmacher, der zu etwa 50 % in der Härterpaste enthalten ist. Werden diese Richtwerte bei der Aushärtung des Endproduktes nicht eingehalten, dann kommt es zu fehlerhaften Endergebnissen bei der Lackierung. Aus diesem Grunde ist die erfindungsgemäße Lösung im Anspruch 1 besonders vorteilhaft, da brauchbare Härtungs-Ergebnisse erreicht werden.

Dieser Vorlauf der Einspritzung einer geringen Menge an Härter-Komponente vor Beginn des eigentlichen Zulaufs von Binder-Komponente und Härter-Komponente für den Mischprozess ist kein Vorlauf, um ein verhältnisgleiches Ausbringen der Binder-Komponente und der Härter-Komponente zu erreichen, denn die Härter-Komponente darf nicht mehr als 4 % betragen, weil sonst nicht zulässige Reaktionen eintreten und u. a. auch eine Peroxid-Bleichwirkung der in der Härter-Komponente enthaltenden Farbpigmente eintreten kann.

Eine vorteilhafte Ausführungsform der vorliegenden Erfindung sieht vor, dass die Eintrittsöffnungen direkt in die Mischkammer des Mischers münden, wobei die Eintrittsöffnung zur Zufuhr der Härter-Komponente zweifach vorhanden ist, um eine redundante Belieferung des Mischgutes mit der Härter-Komponente zu schaffen. Das Erfordernis von einer redundanten Zufuhr der Härter-Komponente beruht auf der Erkenntnis, dass Inhomogenitäten im Mischgut normalerweise durch Lufteinschlüsse in der Härter-Komponente verursacht werden, die sich auch bei sorgfältiger Fertigung der Härter-Komponente in der Praxis nicht sicher vermeiden lassen. Da die Härter-Komponente ein Anteil von weniger als 5 % und bevorzugt von nur etwa 2 % am Gesamtvolumen des Mischgutes aufweist, können bereits kleinste Lufteinschlüsse in der Härter-Komponente zur Folge haben, dass in dem Mischgut Stellen vorhanden sind, die keine Härter-Komponente enthalten und somit nicht aushärten. Da bei der erfindungsgemäßen Vorrichtung bevorzugt zwei Vorratsbehälter für die Härter-Komponente vorgesehen sind und über getrennte Zuführkanäle mit der Mischkammer verbunden sind, kann für den Fall, dass in einem der Zuführkanäle eine Luftblase enthalten sein sollte, der Mischkammer trotzdem über den zweiten Zuführkanal weiterhin die Härter-Komponente zugeführt werden. Die Gefahr, dass in sämtlichen Zuführkanälen gleichzeitig Luftblasen der Härter-Komponente enthalten sein sollten, ist um ein Vielfaches geringer und kann daher vernachlässigt werden. Die Vorrichtung kann beispielsweise für folgende Bindermittelsysteme verwendet werden: Polyesterharze (ungesättigt), Peroxyd-Styrol-Systeme, Epoxid-Harze (zweikomponentig), Polyurethan-Harzsysteme (zweikomponentig), Phenolharz-Systeme, Silicon-Systeme (zweikomponentig), Acrylat-Systeme (zweikomponentig) oder Thiocoll-Systeme (Polidisulfid-Systeme).

Um die Zufuhr der Härter-Komponente mittels einer Sichtkontrolle kontrollieren zu können, ist vorgesehen, dass zumindest der Statorteil aus einem transparenten Material gebildet ist, wobei das transparente Material aus der Gruppe der Kunststoffe, umfassend ein Polycarbonat (PC), ein Polymethylmetacrylat (PMMA) und/oder ein Styrol-Acryl-Nitril (SAN), ausgebildet ist. Dabei ist es weiterhin von besonderem Vorteil, die Härter-Komponente einzufärben. Durch den transparenten Statorteil ist die Zufuhr der Härter-Komponente sichtbar, so dass der Bediener während des Betriebes der Mischvorrichtung die Zufuhr der Härter-Komponente sehenden Auges kontrollieren kann.

Der Rotorteil ist vorteilhaft aus Polyoxymethylen (POM), auch Polyacetal oder Polyformaldehyd genannt, gebildet. Dieses Material weißt bessere Gleiteigenschaften mit einem Polycarbonat bzw. Polypropylen (PP) auf.

Vorteilhafterweise weisen die Mischzähne jeweils Stirnseitenflächen auf, welche jeweils in Axialrichtung aneinander zugewandt sind, um diese bei einer axialwirkenden Kraft zwischen dem Statorteil und dem Rotorteil gegeneinander zu positionieren. Weiterhin sind die Stirnseitenflächen in Bezug zu einer normal zur Rotationsachse angeordneten Ebene unter einem Winkel α geneigt, so dass die Stirnseitenflächen während des Mischvorganges aufeinander abgleiten, ohne dass von den Mischzähnen Material abträgt und in das Mischgut gelangt. Dadurch ist es möglich, die Länge des Rotorteils in Richtung der Rotationsachse kurz zu halten, so dass nach Gebrauch des Rotorteils bzw. des Statorteils nur eine entsprechende Restmenge des Mischgutes in der Mischkammer verbleibt. Die Vorrichtung ermöglicht dadurch einen geringen Verbrauch der Komponenten. Während des Mischvorganges werden die Mischzähne des Rotorteils und die Mischzähne des Statorteils durch den Förderdruck der Komponenten gegeneinander gedrückt, wobei die schräg zueinander verlaufenden Stirnseitenflächen aufeinander gleiten, ohne dass von den Zähnen Werkstoff abrasiv abgetragen wird und in das Mischgut gelangt. Dabei bilden die Komponenten des Mischgutes zwischen den aufeinander gleitenden Stirnseitenflächen einen dünnen Film, der als Gleitschicht wirkt. Der Winkel α, unter dem die Mischzähne gegeneinander der normal zur Rotationsachse angeordneten Ebene geneigt sind, kann mindestens 5°, gegebenenfalls 10° und bevorzugt mindestens 15° betragen.

Eine weitere vorteilhafte Ausführungsform der Erfindung sieht vor, dass das Statorteil eine Stützlagerfläche umfasst, an welcher der Rotorteil mit dem an diesem angeformten Mischzähnen stirnseitig anliegt und abgleitet um eine axiale Gleitlageranordnung zu schaffen. Zunächst wird der Rotorteil über eine den Eintrittsöffnungen abgewandten offenen Endseite in den Statorteil eingeführt, bis dieser an die Stützlagerfläche mit den Mischzähnen anstößt. Dadurch wird eine einseitige axiale Lagerung des Rotorteils im Statorteil ermöglicht. Die Geometrie des Rotorteils ist derart angepasst, so dass die zweiten Mischzähne des Rotorteils beim stirnseitigen Anschlag der Mischzähne an die Stützlagerfläche in den jeweiligen Zwischenräumen der ersten Mischzähne des Statorteils liegen. Die axiale Abstützung des Rotorteils erfolgt in der Fügerichtung des Rotorteils in den Statorteil gegen die Stützlagerfläche, wobei bei einem Axialspiel in Richtung der Öffnung des Statorteils die Gefahr besteht, dass die ersten und zweiten Mischzähne aneinander geraten. Aufgrund der Stirnseitenflächen, welche unter einem Winkel α angeordnet sind, wird der Rotorteil in Richtung der Fügerichtung, aus der der Rotorteil in den Statorteil eingeschoben wird, gegen die Stützlagerfläche zurückgeführt.

Vorteilhafterweise weist der Rotorteil endseitig Vorsprünge auf, welche in die Eintrittsöffnung zur Zufuhr der Binder-Komponente hineinragen und mit der Rotation des Rotorteils mitrotieren, um die Thixotropie der Binder-Komponente bereits im Zuführkanal der Eintrittsöffnung zu reduzieren. Bei der Zuführung der Binder-Komponente in die Mischkammer wird somit die Thixotropie der Binder-Komponente vorübergehend reversibel zerstört, wodurch sich die Härter-Komponente besser in die Binder-Komponente verteilt, insbesondere wenn in einem der Zuführkanäle für die Härter-Komponente einmal eine Luftblase angeordnet sein sollte und dadurch der Mischkammer nur noch eine entsprechend reduzierte Menge der Härter-Komponente zugeführt werden kann.

Beispielsweise muss bei einer Polyester-Binder-Komponente der Abstand zwischen der Härter-Komponente und der Binder-Komponente in dem Mischgut deutlich geringer als 0,5 mm sein, damit eine gleichmäßige Härtung des Mischgutes erreicht wird und keine Bereiche im Mischgut verbleiben, in denen die Härtung ausfällt. Die Vorsprünge sind derart am Rotorteil angeformt, dass diese zumindest teilweise innerhalb der Eintrittsöffnung für die Binder-Komponente rotieren, und in diese die Bewegungsenergie einbringen.

Durch die Einbringung der Bewegungsenergie reduziert sich die Fließfähigkeit, insbesondere bei niedrigen Temperaturen, die abhängig vom Einsatzort deutlich unter 12° liegen können, so dass vermittels der Einrichtung zur Reduzierung der Thixotropie der vorgesehene Förderdruck zur Einführung der Binder-Komponente dennoch ausreicht. Durch das Einbringen der Bewegungsenergie kann die Thixotropie der Binder- Komponente reversibel abgeschwächt oder sogar völlig beseitigt werden.

Eine weitere Ausführungsform der Erfindung sieht vor, dass der Rotorteil eine endseitig offene, hohlzylinderartige Ausnehmung aufweist, in welche ein Kern geometrieangepasst einsetzbar ist, vermittels dessen der Rotorteil antreibbar ist. Der Rotorteil weist einen Hohlraum auf, welcher einseitig offen ist. Durch die hohlzylinderartige Öffnung bzw. Ausnehmung ist der Kern einsetzbar, um den Rotorteil mittels einer Rotationsbewegung anzutreiben. Der Kern kann dabei beispielsweise mit einem Motor in Verbindung stehen, um die Drehbewegung in den Rotorteil einzuleiten. Zur Übertragung des Drehmomentes ist vorgesehen, dass die Ausnehmung vom Körper des Rotorteils radial nach innen verlaufende Rastrippen aufweist, welche in entsprechende Aussparungen im Kern einrasten, die im Kern vorgesehen sind. Vorzugweise können acht Rastrippen vorgesehen sein, wobei auch eine andere Anzahl von Rastrippen ausreichend bzw. erforderlich ist. Die Übertragung des erforderlichen Antriebsdrehmomentes auf den Rotorteil kann alternativ zu den vorgesehenen Rastrippen auch durch ein Polygon erfolgen, welches beispielsweise nach Art eines Sechskant-Inbus-Systems ausgebildet sein kann.

Vorteilhafterweise weist der Rotorteil Dichtlippen auf, um die Mischkammer zwischen dem Rotorteil und dem Statorteil abzudichten und ein Austreten des Mischgutes zu verhindern. Die Dichtlippen sind als umlaufende Vorsprünge endseitig am Rotorteil vorgesehen, und grenzen mit einem Spielmaß bzw. einem Übergangsmaß an die Innenwandung des Statorteils an, um eine Abdichtung der Mischkammer zu schaffen. Dabei können mehrere Dichtlippen vorgesehen sein, um die Dichtwirkung zu verbessern. Im Bereich der Mischkammer weist der Rotorteil einen ersten Außendurchmesser auf, welcher zugleich die innere Wandung der Mischkammer bildet. Ein zweiter Durchmesser beginnt mit der Anordnung der Dichtlippen, wobei dieser größer ist als der erste Durchmesser im Bereich der Mischkammer. Die Abgabeöffnung im Statorteil ist auf der Höhe der Mischkammer angeordnet, so dass das Mischgut im Endbereich des kleineren ersten Durchmessers aus der Mischkammer austreten kann. Erst nach der Durchmessererweiterung sind die Dichtlippen angeordnet, so dass ein Austreten des Mischgutes durch die Dichtlippen auf dem vergrößerten Durchmesser vermindert wird.

Eine weitere Ausführungsform der Erfindung sieht vor, dass der Statorteil zumindest eine tellerförmige Anformung am Außenumfang aufweist, wobei zumindest eine der tellerförmigen Anformungen eine halbmondförmige Rastkontur umfasst, in die beim Einsetzen der Mischvorrichtung ein Stiftelement eingreift, um die radiale Position der Abgabeöffnung im Statorteil zu sichern. Vorzugsweise befindet sich die Abgabeöffnung in einer vertikalen nach unten gerichteten Position, so dass der Bediener das einsatzfertige Mischgut in einem Behälter aufnehmen kann. Das Stiftelement kann an einer Halterung bzw. Aufnahmeeinrichtung für die Mischvorrichtung angeordnet sein, so dass die Mischvorrichtung, welche zunächst aus dem in dem Statorteil gefügten Rotorteil besteht, auf den Kern geschoben wird, welcher ebenfalls an der Aufnahmeeinheit angeordnet ist. Das Stiftelement sichert somit den Statorteil gegen ein Verdrehen, um zu gewährleisten, dass die Ausgabeöffnung für das Mischgut in der vertikal nach unten gerichteten Position verbleibt.

Die tellerförmigen Anformungen wirken als Stabilisierungskragen, die gleichzeitig als Griff für die Aufnahme der Mischvorrichtung durch den Bediener dienen können, um zu verhindern, dass beim Wechseln des Mischers die Hände des Bedieners verschmutzen. Die halbmondförmige Ausnehmung kann alternativ als Bohrung ausgeführt sein, so dass sich der Stift in die Bohrung hinein erstreckt. Gemäß dem vorliegenden Ausführungsbeispiel sind drei tellerförmige Anformungen vorgesehen, wobei zumindest zwei der drei Anformungen materialeinheitlich in die Abgabeöffnung übergehen, und die halbmondförmige Rastkontur an der endseitig angeordneten dritten tellerförmigen Anformung vorgesehen ist. Alternativ kann die halbmondförmige Rastkontur jedoch auch in jeder der tellerförmigen Anordnung vorgesehen sein.

Eine weitere Ausführungsform der Erfindung sieht vor, dass der Rotorteil einen zylinderförmigen Lagerabschnitt aufweist, um im Statorteil zur radialen Lagerung eine Gleitlageranordnung zu schaffen. Der Lagerabschnitt ist als zylinderförmiger Abschnitt außenseitig im Rotorteil vorgesehen, und ist in einem zylinderförmigen Innenkonturabschnitt im Statorteil einsetzbar und bildet eine Gleitlageranordnung. Somit ist der Rotor axial über die Stützlagerfläche bzw. die Stirnseitenflächen der Mischzähne gelagert und radial vermittels des Lagerabschnittes gelagert.

Vorteilhafterweise ist zwischen den Dichtlippen ein Hohlraum ausgebildet, um ein Auffangen von durch die Dichtlippen hindurch tretendem Mischgut zu ermöglichen. Weiterhin weist der Statorteil im zylindrischen Abschnitt des Hohlraumes umfangseitig zumindest eine Austrittsöffnung auf, um ein Austreten von Mischgut seitens des zylinderförmigen Lagerabschnittes zu verhindern. Aufgrund des Druckes des Mischgutes in der Mischkammer kann es vorkommen, dass Mischgut dennoch durch die Dichtlippen hindurch austreten kann. Um zu verhindern, dass das Mischgut endseitig aus dem Statorteil bzw. aus der Mischvorrichtung austritt, ist ein Hohlraum vorgesehen, um austretendes Mischgut aufzunehmen. Sollte der Hohlraum mit Mischgut gefüllt sein, kann dieses durch die Austrittsöffnungen austreten, um endgültig ein Austreten des Mischgutes aus dem Bereich des zylindrischen Lagerabschnittes zu verhindern. Vorzugsweise sind zwei Austrittsöffnungen angeordnet, wobei auch eine einzige Austrittsöffnung vorzugsweise im Bereich der Abgabeöffnung vorgesehen sein kann.

Zur Halterung der Mischvorrichtung an dem Gerät zur Herstellung einer gebrauchsfertigen Spachtelmasse für die Verspachtelung von Oberflächen von z. B. Fahrzeugkarosserien trägt der Statorteil der Mischvorrichtung an seinem den Eintrittsöffnungen abgekehrten Ende eine ringförmige Halterung, die Befestigungsdurchbrechungen aufweist und die bajonettverschlussartig lösbar und drehbar mit dem Statorteil verbunden ist, wobei die Drehbarkeit vermittels Anschlägen derart begrenzt ist, dass eine Passung der Eintrittsöffnung für die Binder-Komponente A mit der Zuführung der Binder-Komponente A und gleichzeitig eine Passung der beiden Eintrittsöffnungen für die Härter-Komponente B mit den Zuführungen der Härter-Komponente B erreicht wird.

Die ringförmige Halterung weist zwei sich gegenüberliegende parallel zum umlaufenden Rand der Halterung bogenförmig verlaufende, schlitzförmige Durchbrechungen auf, von denen jede Durchbrechung zwei Führungsabschnitte mit unterschiedlichen Breiten aufweist, von denen der jeweils breitere Führungsabschnitt zum Einführen eines am unteren umlaufenden Rand des Statorteils angeformten L-förmigen Führungsnocken ausgebildet ist, wobei die Breite des breiteren Führungsabschnittes der Länge des freien abgewinkelten Schenkels des Führungsnockens entspricht, und von denen der jeweils schmälere Führungsabschnitt eine Breite aufweist, die der Stärke des an dem unteren umlaufenden Rand des Statorteils angeformten und parallel zur Längsrichtung der Mischvorrichtung verlaufenden Schenkels des L-förmigen Führungsnockens entspricht.

Der außenliegende Wandbereich des schmäleren Führungsabschnittes weist dabei eine Ausnehmung auf, deren Tiefe in etwa der Stärke des abgewinkelten Schenkels des L-förmigen Führungsnockens entspricht.

Des weiteren wird die erfindungsgemäße Aufgabe durch ein Gerät zur Herstellung einer gebrauchsfertigen Spachtelmasse für die Verspachtelung von Oberflächen, von beispielsweise Fahrzeugkarosserien, erreicht, die mit einer vorher beschriebenen Mischvorrichtung mit wenigstens einer auf einer Tragplatte angeordneten Aufnahme für einen Vorratsbehälter einer Binderkomponente und wenigstens einer auf einer Tragplatte angeordneten Aufnahme für einen Vorratsbehälter einer Härterkomponente und wenigstens jeweils einer einem Vorratesbehälter zugeordneten und bevorzugt jeweils mit einem Hydraulikzylinder verbundenen Kolbenstange versehen ist, wobei ein Anbring- und Führungselement für die Kolbenstangen oberhalb der Vorratsbehälter vorgesehen ist, und wobei das Anbring- und Führungselement mit der Tragplatte über Streben verbunden ist, wobei die Streben auf gegenüberliegenden Seiten vorgesehen sind.

Auf diese Weise lässt sich eine höhere Mischgenauigkeit des Geräts erzielen, da Verformungen des Geräts während des Mischbetriebs minimiert werden, wodurch eine Reduzierung der Federwirkung innerhalb des Geräts auf bis zu 2/100 mm erzielbar ist

Weiterhin ist vorteilhaft, dass wenigstens eine zu öffnende, bevorzugt transparente Schutzabdeckung zur Abdeckung der Vorratsbehälter vorgesehen ist, wobei besonders bevorzugt ein Schutzschalter in Wirkverbindung mit Schutzabdeckung und dem Gerät vorgesehen ist, der das Gerät abschaltet, wenn die Schutzabdeckung geöffnet ist. Auf diese Weise wird die Betriebsicherheit des Geräts erhöht.

Weitere, die Erfindung verbessernde Maßnahmen sind in den Unteransprüchen angegeben oder werden nachfolgend gemeinsam mit der Beschreibung eines bevorzugten Ausführungsbeispiels der Erfindung anhand der Figuren näher dargestellt. Es zeigen:
- Fig. 1: eine schaubildliche Ansicht eines erfindungsgemäßen Gerätes zur Herstellung einer gebrauchsfertigen Spachtelmasse für die Verspachtelung von Oberflächen z. B. von Fahrzeugkarosserien mit einer Vorrichtung zum Vermischen von zwei Komponenten aus einem Statorteil und einem Rotorteil, wobei beide Teile ineinander eingreifende Mischzähne aufweisen,
- Fig. 1A: eine schaubildliche Ansicht des Gerätes mit einer aus zwei über eine Querstrebe verbundene Säulen bestehenden Halterung für die Kolbenstangen und ihre Antriebe und mit einer geöffneten Schutzabdeckung,
- Fig. 1 B: eine schaubildliche Ansicht des Gerätes mit einer aus zwei über eine Querstrebe verbundene Säulen bestehenden Halterung für die Kolbenstangen und ihre Antriebe und mit der geschlossenen Schutzabdeckung,
- Fig. 2: eine schaubildliche Ansicht eines Teils des Gerätes zur Herstellung einer gebrauchsfertigen Spachtelmasse mit eingesetzter Mischvorrichtung,
- Fig. 3: eine schaubildliche Ansicht der aus dem Statorteil und dem Rotorteil bestehenden Mischvorrichtung mit steuerbaren Zuführungen für eine Binder-Komponente und zwei HärterKomponenten aus mit der Mischkammer verbundenen Vorratsbehältern, wobei der Statorteil an seinem den Zuführungen für die Komponenten abgekehrten Ende eine mit dem Statorteil lösbar verbundene und mit dem Gerät fest verbundene ringförmige Halterung,
- Fig. 4: eine vergrößerte Ansicht von oben auf die ringförmige Halterung,
- Fig. 5: eine vergrößerte Ansicht von unten auf die ringförmige Halterung,
- Fig. 6: einen senkrechten Schnitt gemäß Linie V-V in Fig. 4,
- Fig. 7: eine Ansicht von unten auf den Statorteil der Mischvorrichtung, mit den in die Halterung eingreifenden Führungsnocken,
- Fig. 8: eine Seitenansicht eines Teils des Statorteils mit den angeformten Führungsnocken,
- Fig. 9: eine schaubildliche Explosionsdarstellung der Mischvorrichtung mit dem Statorteil und dem Rotorteil,
- Fig. 9A: eine schaubildliche Ansicht des Stators der Mischvorrichtungen mit den Zuführungen für die Binder-Komponente und für die Härter-Komponente,
- Fig. 10: eine Ansicht der Mischvorrichtung, in der der Rotorteil im Statorteil eingesetzt ist und der Statorteil geschnitten dargestellt ist,
- Fig. 11: einen Querschnitt durch die Mischvorrichtung mit geschnittenem Statorteil sowie geschnittenem Rotorteil,
- Fig. 12: einen Längsschnitt durch den Statorteil,
- Fig. 13: eine Draufsicht auf den Statorteil, wobei die Draufsicht endseitig aus Richtung der Eintrittsöffnungen erfolgt,
- Fig. 14: eine Seitenansicht des Rotorteils der Mischvorrichtung und
- Fig. 15: einen Teilquerschnitt durch den Rotorteil sowie dem Statorteil entlang einer ringförmig umlaufenden Mischzone innerhalb der Mischkammer, wobei die Zähne des Statorteils schraffiert und die Zähne des Rotorteils unschraffiert dargestellt sind.

Bei den Figuren handelt es sich lediglich um eine beispielhafte technische Ausführung der vorliegenden Erfindung.

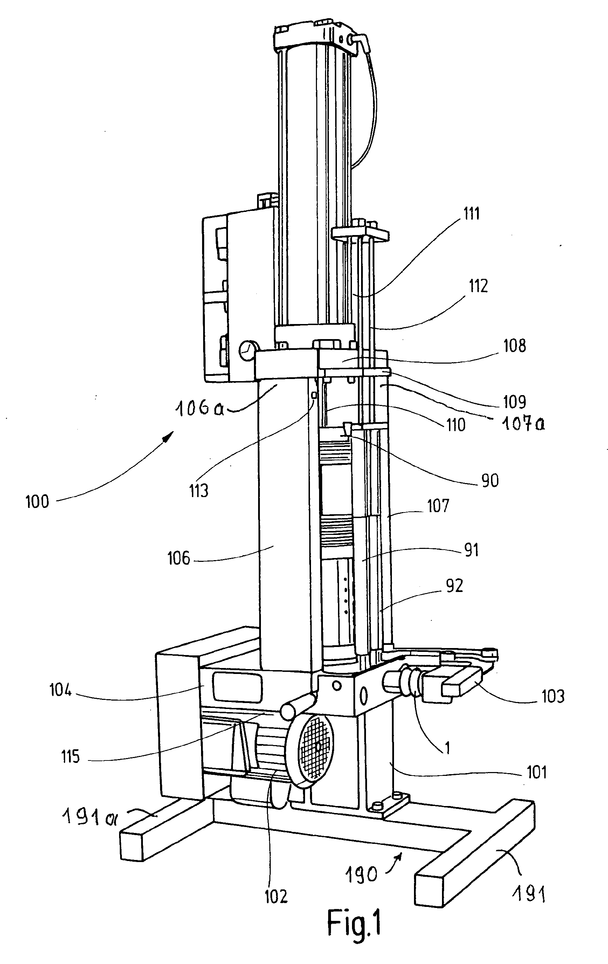

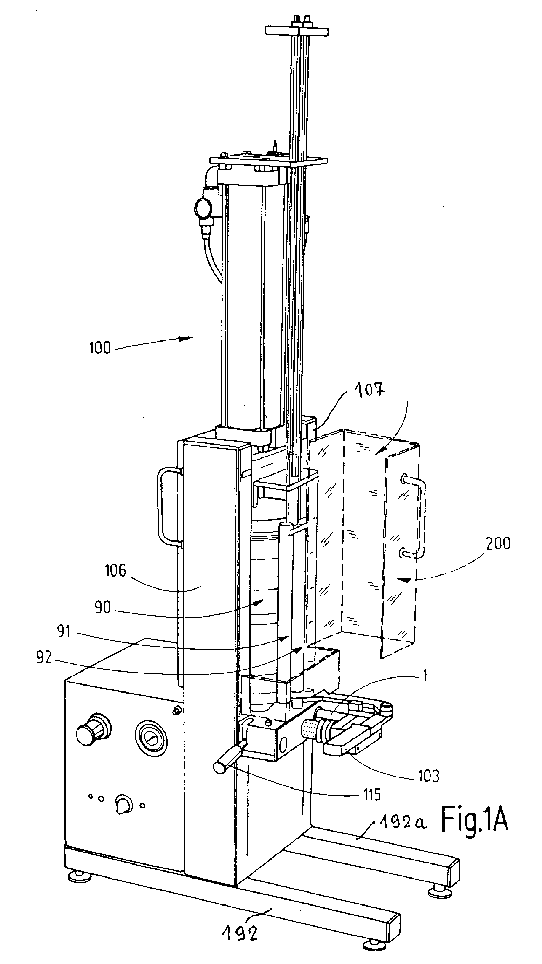

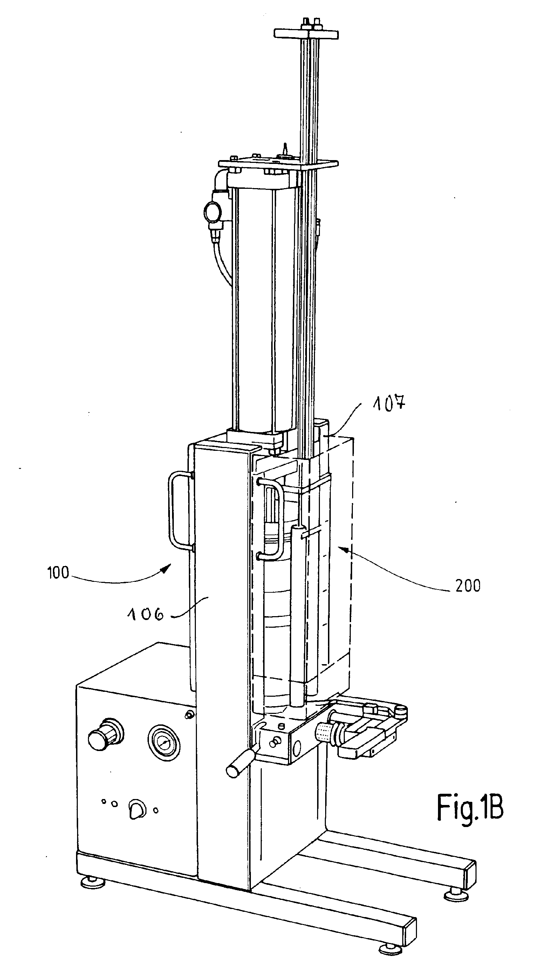

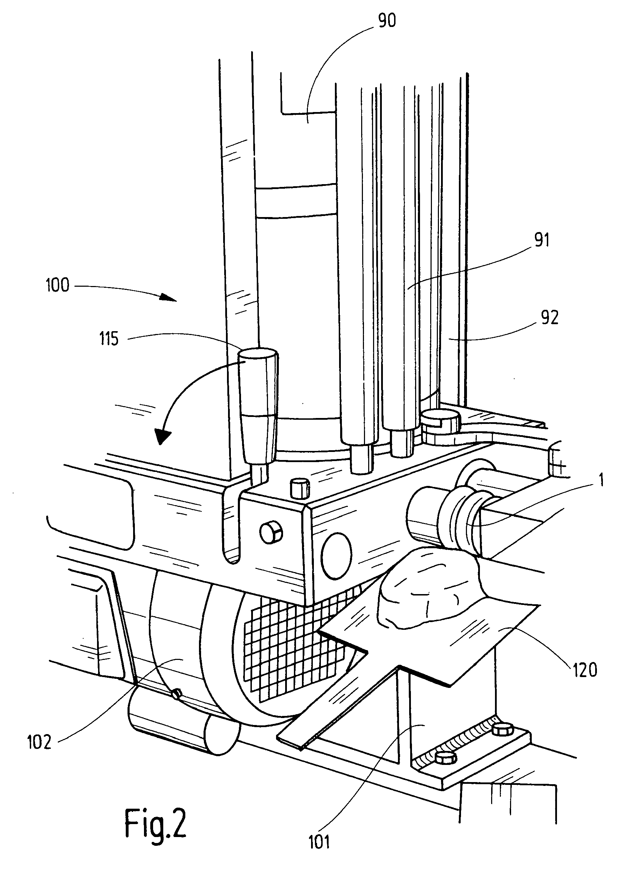

Das in Fig. 1 dargestellte Gerät 100 zur Herstellung einer gebrauchsfertigen Spachtelmasse für die Verspachtelung von Oberflächen, die beispielsweise Fahrzeugkarosserien betreffen, aus einer Binder-Komponente A und mindestens einer Härter-Komponente B umfasst einen Standfuß 101 mit einem Antriebsmotor 102, und eine Halterung 103 für eine Mischvorrichtung 1, die aus einem Statorteil 16 und einem Rotorteil 19 besteht, wobei zwischen den beiden zylindrischen Teilen 16 und 19 ein Ringspalt ausgebildet ist, der die eigentliche Mischkammer 14 bildet. Der Standfuß 101 weist eine Tragplatte 104 zur Aufnahme eines Vorratsbehälters 90 für die Binder-Komponente A und bei der in Fig. 1, 2, 10 und 12 gezeigten Ausführungsform zwei Vorratsbehälter 91, 92 für eine Härter-Komponente B, B1 auf. Es können auch mehr als zwei Vorratsbehälter für die Härter-Komponente B vorgesehen sein. Die Vorratsbehälter 90, 91, 92 sind rutschfest und ortsfest auf der Trägerplatte 104 positioniert. Die Austrittsöffnungen der Vorratsbehälter 90, 91, 92 korrespondieren mit Zuführungskanälen in der Trägerplatte, wobei diese Zuführungskanäle wiederum in Verbund mit den Einführungsöffnungen 17a, 17b, 17'b der Mischvorrichtung 1 stehen, wenn das Gerät 100 in Betrieb genommen wird. Vermittels motorisch betreibbarer Hydraulikzylinder 110, 111, 112 werden Kolbenstangen betrieben, deren freie Enden plattenförmige Kolben tragen, so dass bei Betrieb der Hydraulikzylinder 110, 111, 112 die Kolbenstangen mit den in den Innenräumen der Vorratsbehälter 90, 91, 92 liegenden Kolben in Kolbenstangenlängsrichtung bewegt werden, um die Inhalte der Vorratsbehälter 90, 91, 92 in die Mischvorrichtung 1 zu pressen. Die Betätigung des Motors 102, d. h. das Ein- und Ausschalten, wird über den Betätigungshebel 115 gesteuert, so dass die hergestellte Spachtelmasse in der jeweils gewünschten Menge auf einen Spachtel 120 entnommen werden kann (Fig. 1 und 2).

Zur Führung und Halterung der Kolbenstangen ist eine obere Querstrebe 108 mit einer Seitenführung 109 vorgesehen. An der Querstrebe 108 sind eine vordere säulenartige Seitenstrebe 106 und eine hintere säulenartige Seitenstrebe 107 vorgesehen, wodurch eine hohe Gerätestandfestigkeit und Biegefestigkeit erreicht wird. An den Seitenstreben angeordnet sind Scharniere oder Rastelemente (nicht dargestellt) zur Aufnahme einer transparenten Schutzabdeckung 200 zur Abdeckung des Bereiches zwischen der Tragplatte 104 und der oberen Querstrebe 108, um die Sicherheit des Bedieners des Geräts 100 zu gewährleisten. An der Seitenstrebe 106 ist ein Kontaktschalter 113 als Sicherheitsschalter vorgesehen, der das Gerät 100 vollständig abschaltet, sollte die Abdeckung nicht geschlossen sein (Fig. 1A und 1B). Diese Schutzabdeckung 200 besteht aus einem glasklaren oder durchsichtigen Kunststoff, bevorzugterweise aus Vitak (Handelsname).

Das in Fig. 1 gezeigte Gerät 100 umfasst eine Vorrichtung 1 zum Mischen von zwei Komponenten, über den Vorratsbehälter 90 die Binder-Komponente A und über zwei Vorratsbehälter 91, 92 die Härter-Komponente B, B1 zugeführt wird.

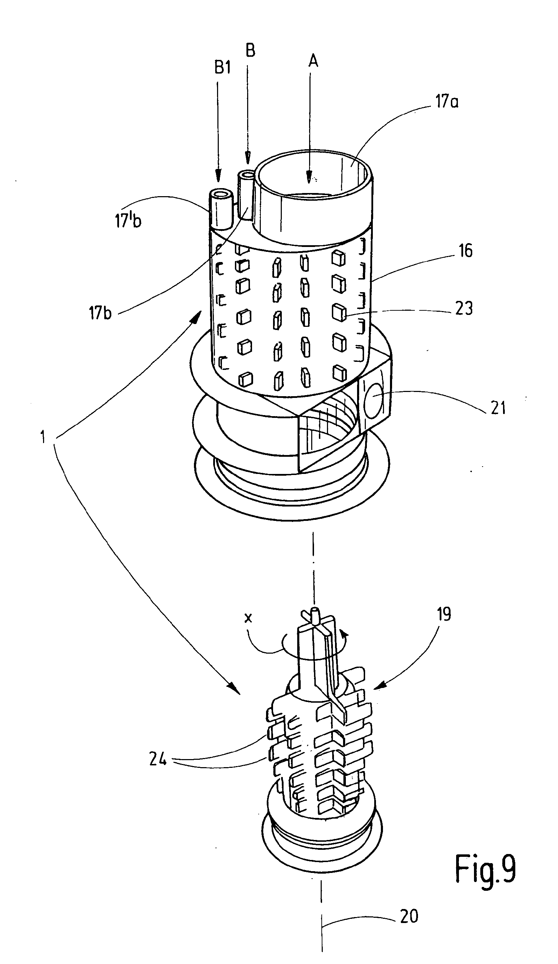

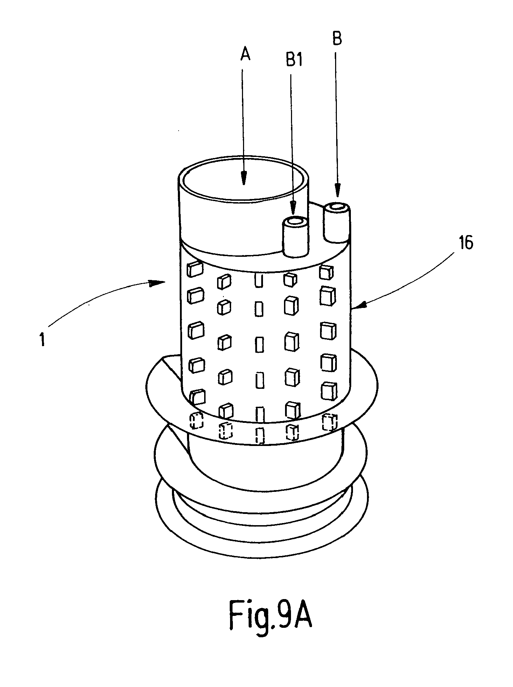

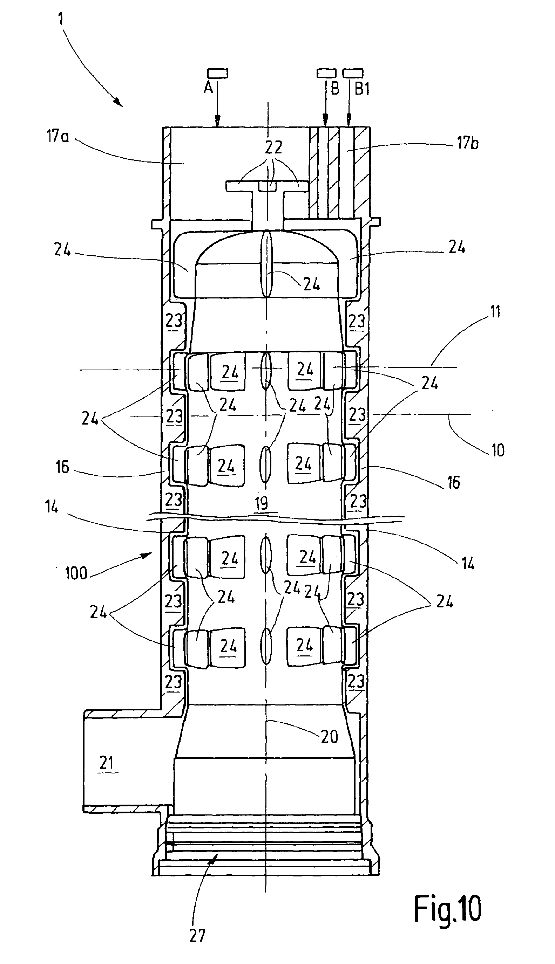

Die in Fig. 9, 9A und 10 dargestellte Mischvorrichtung 1 umfasst einen Statorteil 16 und einen Rotorteil 19. Der Rotorteil 19 ist in den Statorteil 16 eingesetzt und drehbar in diesem gelagert. Bei C greift der Antrieb für den Rotorteil 19 an (Fig. 9). Zur Zuführung des Mischgutes weist der Statorteil 16 Eintrittsöffnungen 17a, 17b und 17'b auf, wobei durch die Eintrittsöffnung 17a die Binder-Komponente A und durch die beiden Eintrittsöffnungen 17b und 17'b die Härter-Komponenten B, B1 zugeführt wird. Zur Verdeutlichung der Zufuhr der drei Komponenten sind jeweilige Pfeile mit A, B und B' gekennzeichnet. Der Rotorteil 19 ist um eine Längsachse 20 drehbar gelagert, wobei endseitig am Rotorteil 19 Vorsprünge 22 vorgesehen sind, welche mit dem Rotorteil 19 mitrotieren und sich in die Eintrittsöffnung 17a hinein erstrecken. Damit wird eine Erhöhung der Fließfähigkeit der thixotropen Binder-Komponente A bewirkt, wobei die Vorsprünge 22 mehrfach am Rotorteil 19 endseitig angebracht sind.

Die Befestigung und Halterung der Mischvorrichtung 1 an der Halterung 103 des Standfußes 101 des Gerätes 100 erfolgt mittels einer ringförmigen Halterung 120. Hierzu trägt der Statorteil 16 an seinem den Eintrittsöffnungen 17a, 17b, 17'b abgekehrten Ende 16a die ringförmige Halterung 120, die Befestigungsdurchbrechungen 121 aufweist und die bajonettverschlussartig lösbar und drehbar mit dem Statorteil 16 verbunden ist, wobei die Drehbarkeit der Mischvorrichtung vermittels Anschlägen 122, 123; 122a, 123a derart begrenzt ist, dass eine Passung der Eintrittsöffnung 17a für die Binder-Komponente A mit der Zuführung der Binder-Komponente A und gleichzeitig eine Passung der beiden Eintrittsöffnungen 17b, 17'b für die Härter-Komponente B mit den Zuführungen für die Härter-Komponente B erreicht wird.

Diese ringförmige Halterung 120 weist zwei sich gegenüberliegende bogenförmig verlaufende, schlitzförmige Durchbrechungen 125, 135 auf, von denen jede Durchbrechung 125, 135 zwei Führungsabschnitte 125a, 125b, 135a, 135b mit unterschiedlichen Breiten aufweist, von denen der jeweils breitere Führungsabschnitt 125a, 135a zum Einführen eines von zwei am unteren umlaufenden Rand 16a des Statorteils 16 angeformten L-förmigen Führungsnocken 140, 140' ausgebildet ist, wobei die Breite des breiteren Führungsabschnittes 125a; 135a der Länge des freien abgewinkelten Schenkels 140a, 140'a des Führungsnockens 125, 135 entspricht und von denen der jeweils schmälere Führungsabschnitt 125b, 135b eine Breite aufweist, die der Stärke des an dem unteren umlaufenden Rand 16a des Statorteils 16 angeformten und parallel zur Längsrichtung der Mischvorrichtung 1 verlaufenden Schenkels 140b, 140'b des L-förmigen Führungsnockens 140, 140' entspricht.

Der jeweils außenliegende Wandbereich 125c, 135c des schmäleren Führungsabschnittes 125b, 135b weist unter Ausbildung zungenartiger Randbereiche 127, 137 stegartige Wandabschnitte 125d, 135d auf, so dass nutenartige Ausnehmungen gebildet werden, deren Tiefe in etwa der Stärke des abgewinkelten Schenkels 140a, 140'a des L-förmigen Führungsnockens 140, 140' entspricht.

Die ringförmige Halterung 120 besteht aus einem Kunststoff oder einem Metall.

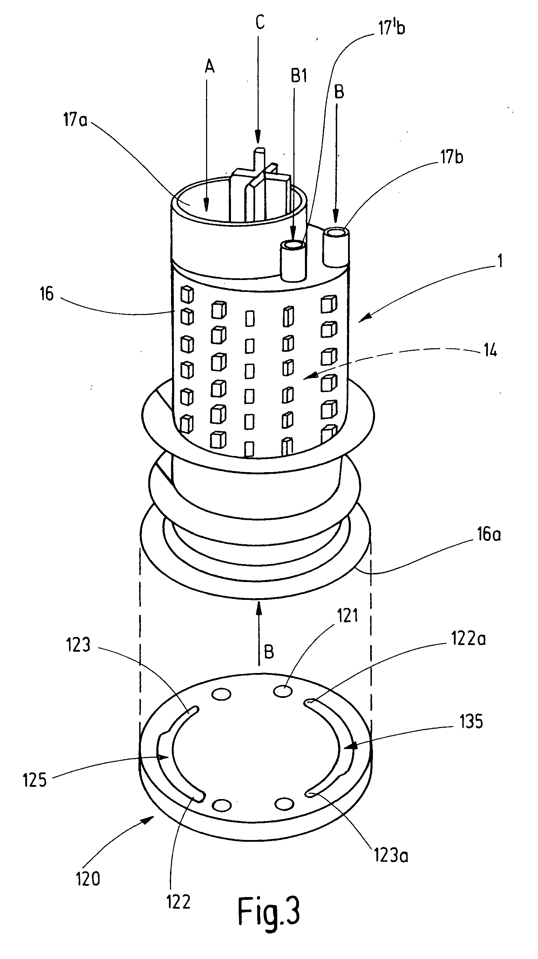

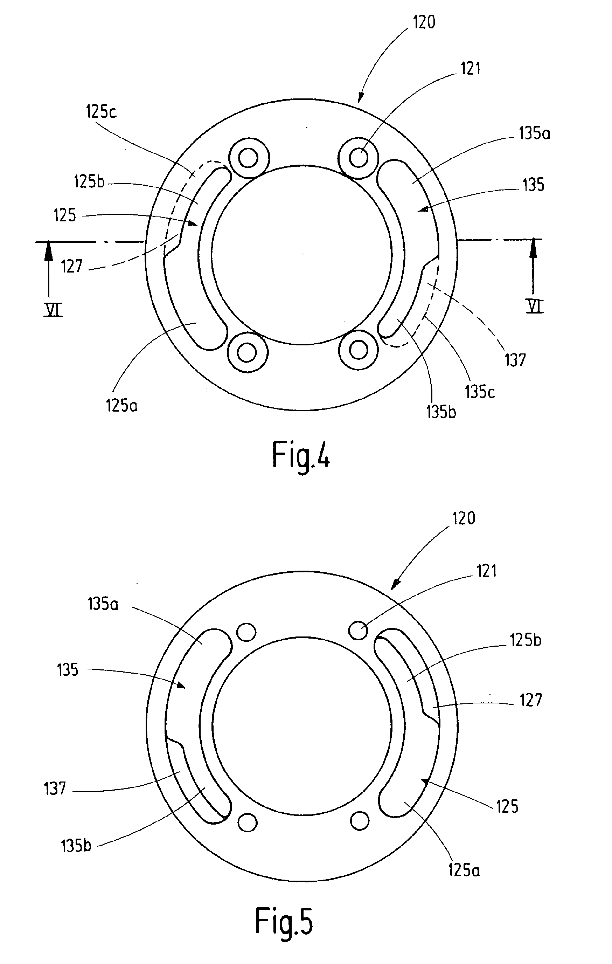

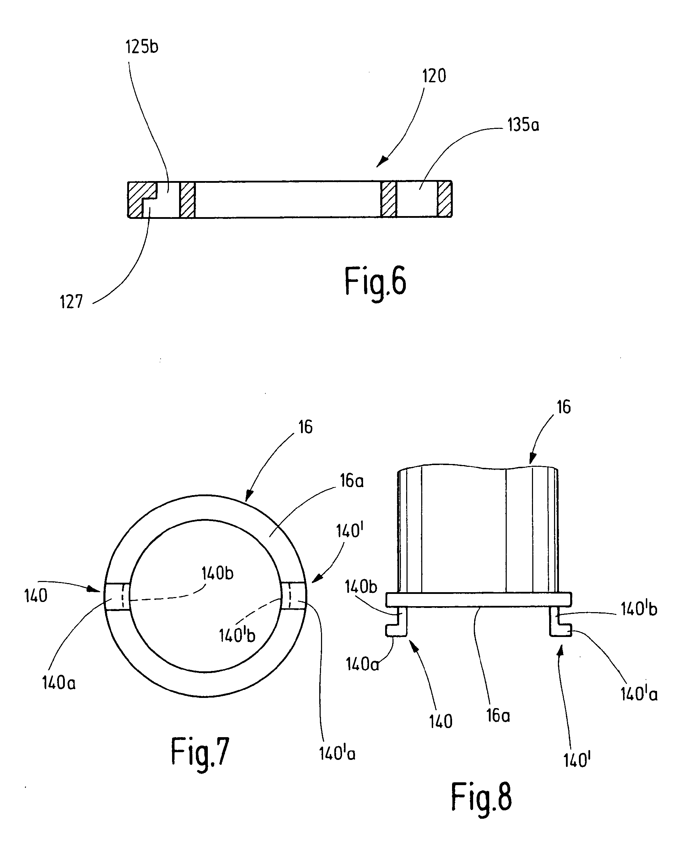

Die ringförmige Halterung 120 wird wie folgt eingesetzt: An der Halterung 103 des Standfußes 101 des Gerätes 100 wird die ringförmige Halterung 120 derart befestigt, dass die schlitzartigen Durchbrechungen 125, 135 mit ihren breiteren Führungsabschnitten 125a, 135a und mit ihren schmäleren Führungsabschnitten 125b, 135b der Mischvorrichtung 1 zugekehrt sind (Fig. 4). Nach der Befestigung der ringförmigen Halterung 120 wird die Mischvorrichtung 1 in der Weise auf die Halterung 120 aufgesetzt, dass die L-förmigen Führungsnocken 140, 140' der Mischvorrichtung 1 durch die breiteren Führungsabschnitte 125a, 135a der schlitzförmigen Durchbrechungen 125, 135 hindurchgeführt werden. Daraufhin wird die Mischvorrichtung 1 um ihre Längsachse verdreht, bis die freien Schenkel 140a, 140' der L-förmigen Führungsnocken 140, 140' an den Enden der schmäleren Führungsabschnitte 125b, 135b der schlitzförmigen Durchbrechungen 125, 135 anschlagen. Dabei Untergreifen die freien Schenkel 140a, 140'a des L-förmigen Führungsnockens 140, 140' die zungenartigen Randbereiche 127, 137 der schmäleren Führungsabschnitte 125b, 135b, die benachbart zum umlaufenden Rand der ringförmigen Halterung 120 verlaufen (Fig. 6). Die Mischvorrichtung 1 ist somit bajonettverschlussartig an der ringförmigen Halterung 120 und somit an der Halterung 103 des Standfußes 101 des Gerätes 100 gehalten. Bei einem Verdrehen der Mischvorrichtung 1 im entgegengesetztem Sinn wird der Bajonettverschluss entriegelt und die Mischvorrichtung 1 kann dem Gerät 100 entnommen werden, um eine gebrauchte Mischvorrichtung 1 gegen eine neue Mischvorrichtung austauschen zu können. Durch diese Art der Halterung der Mischvorrichtung 1 an dem Gerät 100 wird erreicht, dass nach dem Einsetzen der Mischvorrichtung 1 in die ringförmige Halterung 120, dass die Drehbarkeit der Mischvorrichtung 1 vermittels der Anschläge 122, 123, 122a, 123a an den Enden der schlitzartigen Durchbrechungen 125, 135 der ringförmigen Halterung 120, 130 derart begrenzt wird, dass eine Passung der Eintrittsöffnung 17a für die Binder-Komponente A mit der Zuführung für die Binder-Komponente A und gleichzeitig eine Passung der beiden Eintrittsöffnungen 17b, 17'b für die Härter-Komponente B mit den Zuführungen für die Härter-Komponenten B, B1 erreicht wird (Fig. 3).

Durch die Vorsprünge 22 am Ende des Rotorteils 19 wird Bewegungsenergie in die Binder-Komponente A eingebracht, um deren Thixotropie reversibel zu zerstören, die Binder-Komponente A kann sich dadurch beim Eintritt in eine nachfolgend angeordnete Mischkammer 14 gleichmäßiger mit den beiden Härter-Komponenten B und B1 vermischen. Die Mischkammer 14 ist zwischen dem Rotorteil 19 sowie dem Statorteil 16 ringspaltartig ausgebildet. Die zu vermischenden Komponenten A, B und B1 werden derart in die Mischvorrichtung 1 zugeführt, dass sie sich erst im inneren der Mischkammer 14 miteinander verbinden. Dadurch bleiben nach dem Beenden des Mischvorganges und dem Trennen der Mischvorrichtung 1 von einer entsprechenden Basisstation alle Mischgutreste in der Mischvorrichtung 1. Diese ist als Einwegteil ausgestaltet, welches nach Gebrauch entsorgt und durch ein entsprechendes Neuteil ersetzt wird. Über die beiden Eintrittsöffnungen 17b und 17'b wird die Härter-Komponente B und B1 der Mischkammer 14 zugeführt, in der die Härter-Komponenten mit der Binder-Komponente A vermischt. Dabei erfolgt die Zuführung der Komponenten A, B und B1 in folgender Reihenfolge: Zuerst wird eine geringe Menge an Härter-Komponente B der Mischkammer zugeführt. Danach werden gleichzeitig die Binder-Komponente A und die Härter-Kompnente B1 zugeführt, so dass die in die Mischkammer gelangende Binder-Komponente A auf die sich bereits in der Mischkammer befindliche Härter-Komponente B trifft und sich bereits mit dieser vermischt. Diese Vorgehensweise hat zur Folge, dass in die Mischkammer einfließende Binder-Komponente A auf die bereits vorhandene Härter-Komponente B trifft und mit dieser vermischt wird, so dass kein Anteil an Binder-Komponente austreten kann, der keine Härter-Komponente aufweist. Es tritt somit immer mit der Härter-Komponente vermischte Binder-Komponente aus der Mischkammer aus, so dass auch das zuerst austretende Gemisch Härter-Komponente enthält und sofort verarbeitet werden kann. Danach wird Härter-Komponente der Mischkammer 14 zugeführt, bevor die Binder-Komponente in die Mischkammer einfließt. Dieser Vorlauf an Härter-Komponente wird steuerungstechnisch erreicht, indem eine entsprechende Steuerung der Dosiereinrichtungen 90, 91 und 92 für die beiden Härter-Komponenten und für die Binder-Komponente erfolgt (Fig. 10). Des Weiteren kann der Stator der Mischvorrichtung auch nur eine Zuführung für die Härter-Komponente aufweisen. In diesem Fall erfolgt über die Steuerung der Dosiervorrichtung zuerst eine Zufuhr einer kleinen Menge an Härter-Komponente in die Mischkammer 14, woraufhin dann die Zuführung der Binder-Komponente zusammen mit der Zuführung weiterer Härter-Komponenten erfolgt.

Mit Hilfe von vorgeschalteten Dosiereinrichtungen 90, 91, 92 werden die zu vermischenden Komponenten kontinuierlich durch die Mischkammer 14 hindurch zu einer am Statorteil 16 angeordneten Abgabeöffnung 21 gefördert, die in Durchflussrichtung hinter den Eintrittsöffnungen 17a, 17b und 17'b und nach der Mischkammer 14 angeordnet ist. Am Statorteil 16 sind mehrere erste Mischzähne 23 angeordnet, welche sich radial nach innen in die Mischkammer 14 erstrecken, wohingegen am Rotorteil 19 zweite Mischzähne 24 angeordnet sind, welche sich radial nach außen in die Mischkammer 14 hineinerstrecken.

Vermittels einer Rotationsbewegung des Rotorteils 19 im Statorteil 16 werden somit die Mischzähne 23, 24 gegeneinander bewegt, so dass eine Vermischung der beiden Komponenten A, B und B1 bewirkt wird. Wenn bereits der Vorlauf der Härter-Komponente B erfolgt ist und ein Teil der nachfolgenden Binder-Komponente A mit der Härter-Komponente B sich vermischt hat und die beiden anderen Komponenten A und B1 in die Mischkammer gedrückt werden, kann die weitere Zufuhr der Härter-Komponente B eingestellt werden. Es werden dann in der Mischkammer 14 zugeführte Binder-Komponente A und Härter-Komponente B1 miteinander vermischt. Diese beiden Komponenten A und B1 werden in einem vorgegebenen Verhältnis solange der Mischkammer zugeführt, bis die jeweils gewünschte Menge an Mischgut erhalten wird. Die ersten Mischzähne 23 sind auf einer ersten Mischzahnebene 10 und die zweiten Mischzähne 24 auf einer zweiten Mischzahnebene 11 angeordnet. Insgesamt sind sechs erste Mischzahnebenen 10 und sechs zweite Mischzahnebenen 11 vorgesehen, welche ineinander verschachtelt wechselweise in axialer Richtung entlang der Längsachse 20 angeordnet sind. Die zweiten Mischzähne 24 laufen durch die Rotationsbewegung des Rotorteils 19 in den Zwischenräumen der ersten Mischzähne 23 radial um, welche ruhend am Statorteil 16 angeformt sind. Dadurch entsteht zwischen den Mischzähnen 23 und 24 eine Scher- bzw. Teilungsbewegung, so dass das Mischgut eine optimale Durchmischung erfährt.

Eine Vorvermischung der beiden Komponenten A, B und/oder B1 erfolgt durch größere zweite Mischzähne 24, welche am vorderen Ende des Rotorteils 19 angeordnet sind, so dass diese Komponenten durch diese Mischzahnebene vorvermischt werden. Die größeren ausgebildeten endseitig angeordneten zweiten Mischzähne 24 sind vierfach auf dem Umfang des Rotorteils 19 angeordnet und gehen jeweils in die ebenfalls vierfach vorhandenen Vorsprünge 22 über. Am offenen Ende weist der Statorteil 16 eine Aufnahmeöffnung auf, in welchem ein zylindrischer Lagerabschnitt 27, welcher am Rotorteil 19 angeformt ist, eine Lagerung des Rotorteils 19 im Statorteil 16 bewirkt. So ist eine radiale Lagerung des Rotorteils 19 im Statorteil 16 geschaffen. Die Durchmesserpassung des zylindrischen Lagerabschnittes 27 am Rotorteil 19 ist im Durchmesser so bemessen, dass eine entsprechende Gleitlageranordnung entsteht.

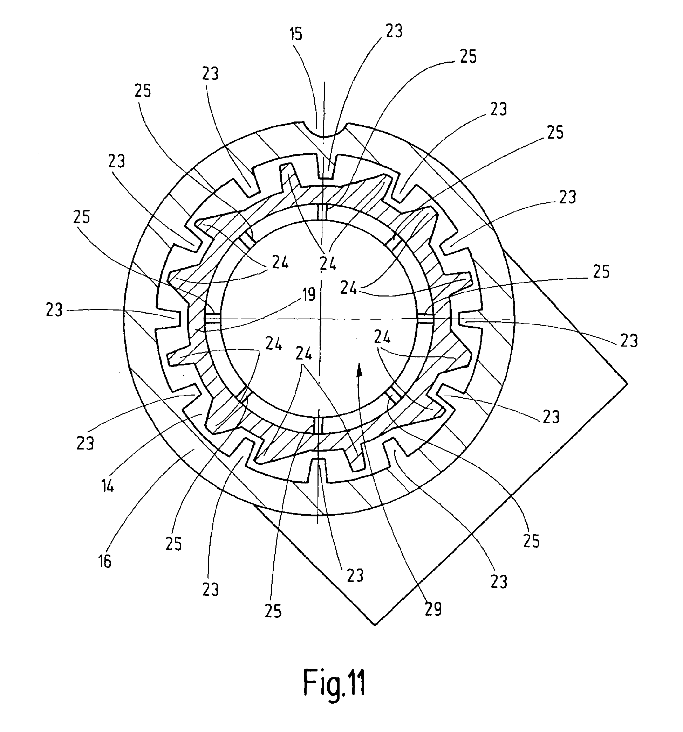

Fig. 11 zeigt einen Querschnitt der Mischvorrichtung 1, wobei sowohl der Statorteil 16 als auch der Rotorteil 19 im Querschnitt dargestellt sind. Hierin ist insbesondere die Anordnung der Mischzähne 23 und 24 illustriert, wobei die zweiten Mischzähne 24 am Rotorteil 19 derart ausgeformt sind, dass in Bezug auf eine spritzgusstechnische Herstellung des Rotorteils 19 lediglich eine einzige Teilungsebene zur Anwendung eines einhubigen Spritzgusswerkzeuges hinreichend ist. Weiterhin ist erkennbar, dass die Mischzähne 23, 24 jeweils materialeinheitlich an dem Statorteil 16 sowie am Rotorteil 19 angeformt sind, so dass die Mischvorrichtung 1 lediglich aus diesen beiden Komponenten besteht. Der Rotorteil 19 weist einen inneren Bereich auf, welcher als Ausnehmung 29 hohl ausgebildet ist. In die Ausnehmung 29 verlaufen Rastrippen 25 radial nach innen, wobei auf dem Umfang insgesamt acht Rastrippen 25 angeordnet sind. Der Statorteil 16 umfasst eine halbmondförmige Rastkontur 15, welche am Außenumfang vorgesehen ist.

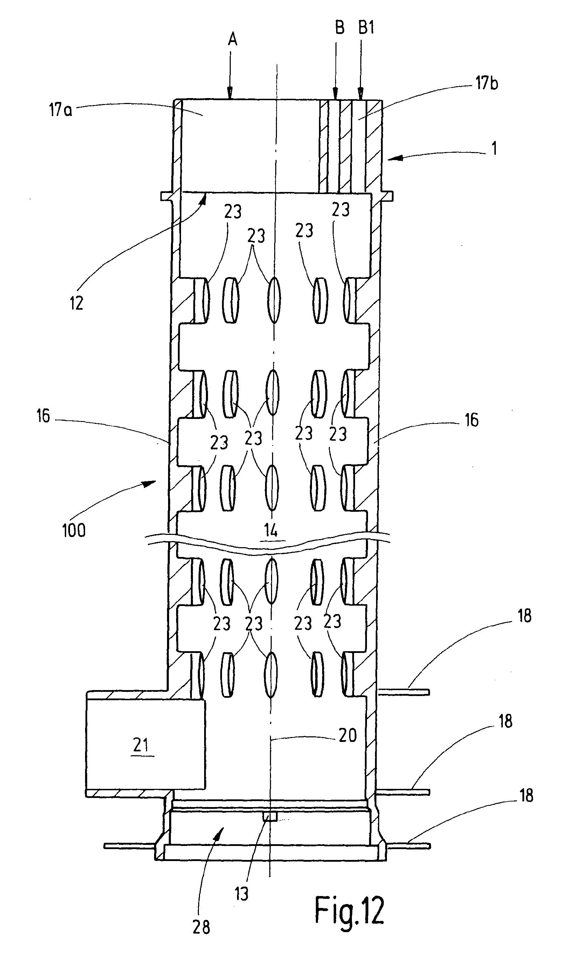

Fig. 12 illustriert einen Querschnitt des Statorteils 16, welcher entlang der Längsachse 20 geschnitten dargestellt ist. Damit sind die Anordnungen der Eintrittsöffnungen 17a, 17b, 17'b im Schnitt dargestellt, welche direkt in die Mischkammer 14 münden. Innenliegend sind in der Wandung des Statorteils 16 die ersten Mischzähne 23 auf den insgesamt sechs Ebenen angeordnet, wobei insgesamt zwölf erste Mischzähne 23 über den Umfang auf jeweils einer Mischzahnebene verteilt vorgesehen sind. Am gegenüberliegend den Eintrittsöffnungen 17a, 17b und 17'b gelegenen Ende der Mischkammer 14 ist eine Abgabeöffnung 21 vorgesehen, welche das Mischgut radial nach außen aus der Mischkammer 14 herausführt (Fig. 9). Am Außenumfang des Statorteils 16 sind tellerförmige Anformungen 18 ausgebildet, wobei insgesamt drei tellerförmige Anformungen 18 auf der Höhe der Abgabeöffnung 21 sowie endseitig am Statorteil 16 vorgesehen sind. Die Eintrittsöffnung 17a bzw. 17b geht auf der Höhe einer Stützlagerfläche 12 in die Mischkammer 14 über, wobei die Stützlagerfläche 12 eine axiale Lagerung des - hier nicht dargestellten - Rotorteils 19 bildet. Der Statorteil 16 ist am hinteren Ende, welches sich gegenüberliegend zu den Eintrittsöffnungen 17a, 17b, 17'b befindet, endseitig geöffnet, so dass der Rotorteil 19 durch diese Öffnung in den Statorteil 16 gefügt werden kann. Im Bereich der Öffnung weist der Statorteil 16 einen als Abschnitt ausgeführten Hohlraum 28 auf, um das Mischgut, welches sich in diesem Bereich hineinbewegt, aufzunehmen. Um das Mischgut gegebenenfalls austreten zu lassen, sind Austrittsöffnungen 13 in der Wandung eingebracht, welche insgesamt zweifach auf dem Umfang angeordnet sind.

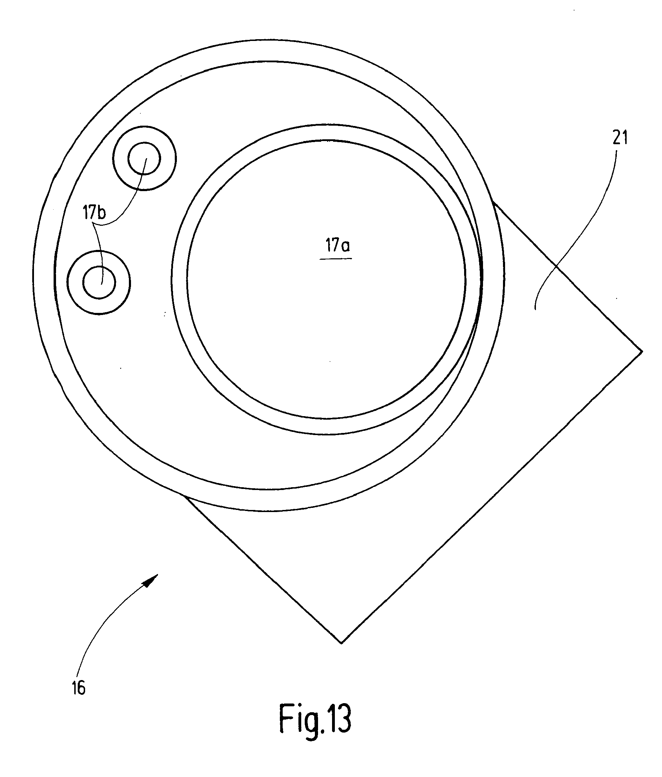

In Fig. 13 ist eine Draufsicht auf den Statorteil 16 gezeigt, welche insbesondere die Anordnung der Eintrittsöffnungen 17a, 17b, 17'b zeigt. Die Eintrittsöffnung 17a ist exzentrisch ausgebildet und weist einen kreisförmigen Querschnitt auf. Neben der Eintrittsöffnung 17a sind zwei Eintrittsöffnungen 17b, 17'b vorgesehen, um eine redundante Zufuhr der Härter-Komponente in die Mischkammer 14 zu ermöglichen. Dabei sind die beiden Eintrittsöffnungen 17b, 17'b zueinander beabstandet ausgebildet und werden über ebenfalls voneinander getrennte Zufuhrleitungen und Dosiereinrichtungen 91, 92 gespeist. Weiterhin ist die Anordnung der Abgabeöffnung 21 dargestellt, welche das Mischgut seitlich aus dem Statorteil 16 hinaus befördert.

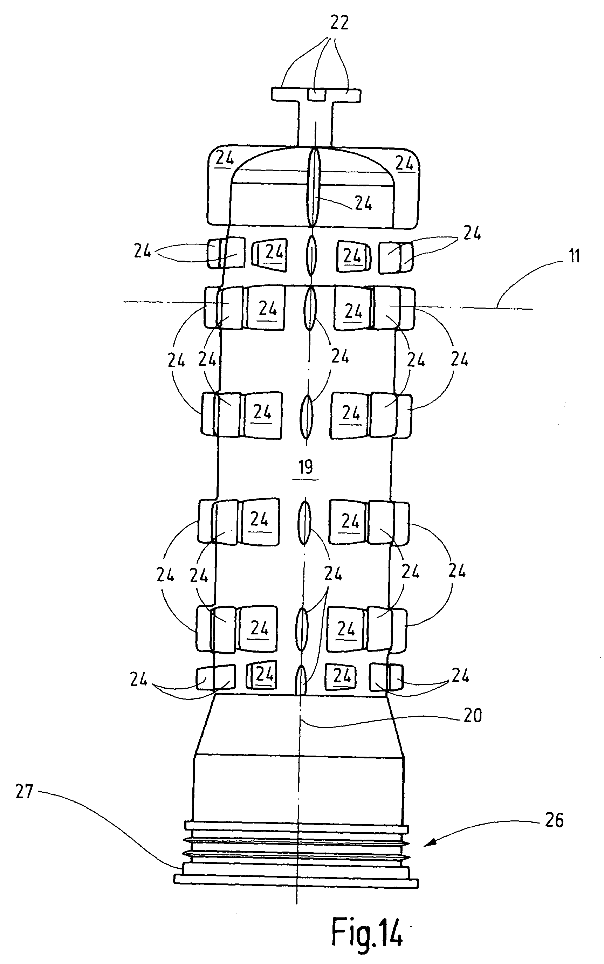

In Fig. 14 ist der Rotorteil 19 dargestellt, wobei insbesondere die zweiten Mischzähne 24 hinsichtlich ihrer Verteilung auf dem Umfang des Rotorteils 19 dargestellt sind. Insgesamt sind zwölf Mischzähne auf einer Mischzahnebene 11 vorgesehen, so dass bei insgesamt sechs Mischzahnebenen 11 insgesamt 72 Mischzähne am Rotorteil 19 angeordnet sind. Zuzüglich befinden sich am oberen Teil des Rotorteils 19 sechs weitere Mischzähne 24 zur Vorhermischung des Mischgutes. Diese gehen in die Vorsprünge 22 über, welche ebenfalls vierfach an einer Art Verlängerung des Rotorteils 19 angeordnet sind.

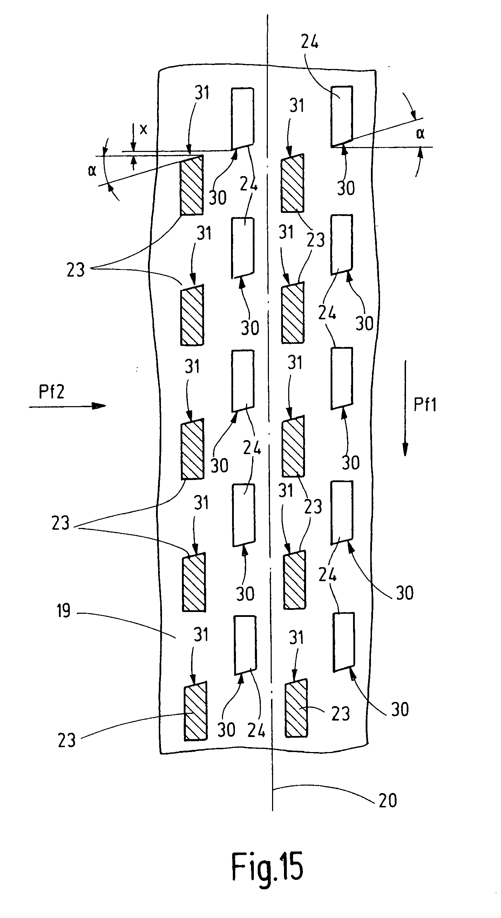

Fig. 15 illustriert einen Teilquerschnitt durch die Mischvorrichtung 1 entlang der ringförmigen umlaufenden Mischzone, wobei die Mischzähne 23 des Statorteils 16 schraffiert und die Mischzähne 24 des Rotorteils 19 unschraffiert dargestellt sind. Die Mischzähne 23 und 24 der einzelnen Mischzahnebenen sind derart zueinander beabstandet angeordnet, dass die Zähne zueinander Zahnlücken aufweisen. Zwischen den einzelnen Mischzahnebenen weisen die Mischzähne 23, 24 Zwischenräume auf, durch die bei der Rotationsbewegung die am betreffenden Zwischenraum gegenüberliegenden Mischzähne der jeweils anderen Seite hindurch laufen. Durch eine kontinuierliche Zuführung der Komponenten A, B in die Mischkammer 14 kommt es zu einer Teilung des Mischgutstromes, d. h. der Mischgutstrom fließt jeweils an der einen Seite des betreffenden Zahnes 23, 24 und der andere Teil an der anderen Seite des betreffenden Zahnes 23, 24 vorbei. Da diese Teilung in mehreren, der Anzahl der Etagen bzw. Mischzahnebenen entsprechenden Stufen stattfindet, wird das Mischgut intensiv vermischt.

Die Mischzähne 23 weisen Stirnseitenflächen 31 auf, welche den Stirnseitenflächen 30, die an den zweiten Mischzähnen 24 angeformt sind, gegenüberstehen. Bei einer Berührung der Mischzähne 23 und 24 kann somit ein Abgleiten erfolgen, ohne dass Material an den Mischzähnen abgetragen wird. Dies kann insbesondere dann erfolgen, wenn der Rotorteil 19 gegenüber dem Statorteil 16 um einen Betrag x versetzt wird, so dass die Mischzähne 23, 24 aufeinander treffen. Die Stirnseitenflächen 30, 31 sind unter einem Winkel α angeschrägt, wobei der Winkel α vorzugsweise 15° beträgt.

Für den Betrieb des Gerätes 100 wird verfahrenstechnisch so vorgegangen, dass die Kolben 110, 111, 112 mit den Kolbenplatten vermittels ihrer Kolbenstangen 110, 111, 112 von Hand in die geöffneten Vorratsbehälter 90, 91, 92 eingesetzt werden und sobald die Kolbenplatten unterhalb der Öffnungsränder der Vorratsbehälter 90, 91, 92 zu liegen kommen, wird der Motor 102 für die Hydrauliken zum Betätigen der Kolbenstangen 110, 111, 112 in Betrieb gesetzt; erst dann werden die einzelnen Mischprozesse durchgeführt. Durch diese Maßnahme werden Verletzungen verhindert, die dadurch eintreten, dass Finger der Hand einer Bedienungsperson im Bereich des Öffnungsrandes, insbesondere- des Vorratsbehälters 90 für die Binder-Komponente A, zu liegen kommen und durch die mit relativ hohem Druck in Behälterrichtung bewegte Kolbenplatte eingeklemmt werden.

Mit der Verschwenkbarkeit der türartigen Abdeckung erfolgt die Inbetriebnahme oder Außerbetriebnahme der Antriebseinrichtungen des Mischers derart, dass beim Öffnen der Abdeckung die Antriebseinrichtungen außer Betrieb gesetzt werden. Hierfür ist in der Abdeckung ein in der Zeichnung nicht dargestellter Sicherheitsschalter eingebaut.

Zur Verbesserung der Standfestigkeit des Gerätes ist es vorteilhaft, wenn der Standfuß 190 des Gerätes aus einem Doppel-T-Profil 191, 191a (Fig. 1) oder aus zwei parallel zueinander verlaufenden Holmen 192, 192a besteht, die über das Gerät selbst miteinander verbunden sind (Fig. 1A).

## Patentansprüche

1. Mischvorrichtung (1) zum Vermischen von zumindest zwei Komponenten, insbesondere von einer Binder-Komponente (A) und einer Härter-Komponente (B) zu einem pastösen oder flüssigen Mischgut für ein Gerät (100) zur Herstellung einer gebrauchsfertigen Spachtelmasse für die Verspachtelung von Oberflächen, von beispielsweise Fahrzeugkarosserien, wobei die Mischvorrichtung mit zumindest einer Eintrittsöffnung (17a) zur Zufuhr der Binder-Komponente (A) und zumindest einer weiteren Eintrittsöffnung (17b; 17'b) zur Zufuhr der Härter-Komponente (B), sowie mit einer Abgabeöffnung (21) zur Abgabe des Mischgutes versehen ist, wobei zwischen den Eintrittsöffnungen (17a, 17b) und der Abgabeöffnung (21) eine Mischkammer (14) angeordnet ist, innerhalb derer sich die zumindest zwei Komponenten (A, B) miteinander vermischen,
**dadurch gekennzeichnet,**
**dass** die Mischvorrichtung (1) einen hohlzylinderartigen Statorteil (16) und einen in diesem konzentrisch um eine Längsachse (20) drehbar aufgenommenen Rotorteil (19) aufweist und die Mischkammer (14) zwischen dem Statorteil (16) und dem Rotorteil (19) ringspaltartig ausgebildet ist, wobei sich mehrere am Statorteil (16) angeformte erste Mischzähne (23) radial nach innen und mehrere am Rotorteil (19) angeformte zweite Mischzähne (24) radial nach außen in die Mischkammer (14) hinein erstrecken, um vermittels einer Rotationsbewegung des Rotorteils (19) im Statorteil (16) die Mischzähne (23, 24) gegeneinander zu bewegen und eine Vermischung der Komponenten (A, B) zu schaffen, wobei der Statorteil (16) mindestens eine, bevorzugterweise zwei mit der Mischkammer (14) verbundene Eintrittsöffnungen (17b, 17'b) für die Härter-Komponente (B) aufweist und dass die ersten Mischzähne (23) auf zumindest einer ersten Mischzahnebene (10) und die zweiten Mischzähne (24) auf zumindest einer zweiten Mischzahnebene (11) angeordnet sind, und die Mischzahnebenen (10, 11) axial in Richtung der Längsachse (20) etagenartig zueinander versetzt sind, sodass die zweiten Mischzähne (24) des Rotorteils (19) in den jeweiligen Zwischenräumen der ersten Mischzähne (23) des Statorteils (16) radial umlaufen und dass wenigstens sechs Mischzahnebenen (10, 11) am Rotorteil (19) und/oder am Statorteil (16) vorgesehen sind, wobei bevorzugt die Anzahl der Mischzahnebenen (10, 11) am Rotorteil (19) und am Statorteil (16) gleich sind.

2. Mischvorrichtung nach Anspruch 1,
**dadurch gekennzeichnet,**
**dass** die Zuführung der Binder-Komponente (A) und der Härter-Komponente (B) vermittels Steuereinrichtungen zur Mischkammer (14) derart erfolgt, dass die Härter-Komponente (B) mit einem geringen Vorlauf oder einer Vor-Einspritzung gegenüber der Zuführung der Binder-Komponente (A) der Mischkammer (14) zugeführt wird und wobei vor oder bei Beginn des kontinuierlichen Mischprozesses mit der Drehbewegung der gegeneinander laufenden Mischzähne (23, 24) eine Menge von 0,1 Gramm bis 5 Gramm, bevorzugterweise 0,2 Gramm, pastöse oder flüssige Härter-Komponente (B) in die Mischkammer (14) eingespritzt bzw. injiziert wird

3. Mischvorrichtung nach Anspruch 1 oder 2,
**dadurch gekennzeichnet,**
**dass** der Statorteil (16) an seinem den Eintrittsöffnungen (17a, 17b, 17'b) abgekehrten Ende (16a) eine ringförmige Halterung (120) trägt, die Befestigungsdurchbrechungen (121) aufweist und die bajonettverschlussartig lösbar und drehbar mit dem Statorteil (16) verbunden ist, wobei die Drehbarkeit vermittels Anschlägen (122, 123; 122a, 123a) derart begrenzt ist, dass eine Passung der Eintrittsöffnung (17a) für die Binder-Komponente (A) mit der Zuführung für die Binder-Komponente A und gleichzeitig eine Passung der beiden Eintrittsöffnungen (17b, 17'b) für die Härter-Komponente (B) mit den Zuführungen für die der Härter-Komponente B erreicht wird.

4. Mischvorrichtung nach Anspruch 3,
**dadurch gekennzeichnet,**
**dass** die ringförmige Halterung (120) zwei sich gegenüberliegende parallel zum umlaufenden Rand der Halterung (120) bogenförmig verlaufende, schlitzförmige Durchbrechungen (125; 135) aufweist, von denen jede schlitzförmige Durchbrechung (125; 135) zwei Führungsabschnitte (125a, 125b; 135a, 135b) mit unterschiedlichen Breiten aufweist, von denen der jeweils breitere Führungsabschnitte (125a; 135a) zum Einführen eines am unteren umlaufenden Rand (16a) des Statorteils (16) angeformten L-förmigen Führungsnockens (140; 140') ausgebildet ist, wobei die Breite des breiteren Führungsabschnittes (125a, 135a) der Länge des freien abgewinkelten Schenkels (140a; 140'a) des Führungsnockens (140; 140') entspricht, und von denen der jeweils schmälere Führungsabschnitt (125b; 135b) eine Breite aufweist, die der Stärke des an dem unteren umlaufenden Rand (16a) des Statorteils (16) angeformten und parallel zur Längsrichtung der Mischvorrichtung (1) verlaufenden Schenkels (140b; 140'b) des L-förmigen Führungsnockens (140; 140') entspricht.

5. Mischvorrichtung nach einem der Ansprüche 3 oder 4,
**dadurch gekennzeichnet,**
**dass** der jeweils außenliegende Wandbereich (125c; 135c) des schmäleren Führungsabschnittes (125b; 135b) unter Ausbildung zungenartiger Randbereiche (127, 137) stegartige Wandabschnitte (125d; 135d) mit nutenartigen Ausnehmungen aufweist, deren Tiefe in etwa der Stärke des abgewinkelten Schenkels (140a; 140'a) des L-förmigen Führungsnockens (140, 140') entspricht, wobei die Anzahl der L-förmigen Führungsnocken größer als zwei L-förmige Führungsnocken sein kann.

6. Mischvorrichtung nach einem der vorgenannten Ansprüche 3 bis 5,
**dadurch gekennzeichnet,**
**dass** die ringförmige Halterung (120) aus einem Kunststoff oder Metall besteht.

7. Mischvorrichtung nach einem der vorgenannten Ansprüche 1 bis 6,
**dadurch gekennzeichnet,**
**dass** die Mischzähne (23, 24) jeweils Stirnseitenflächen (30, 31) aufweisen, welche jeweils in Axialrichtung einander zugewandt sind, um diese bei einer axial wirkenden Kraft zwischen dem Statorteil (16) und dem Rotorteil (19) gegeneinander zu positionieren.

8. Mischvorrichtung nach Anspruch 7,
**dadurch gekennzeichnet,**
**dass** die Stirnseitenflächen (30, 31) in Bezug zu einer normal zur Rotationsachse angeordneten Ebene unter einem Winkel (α) geneigt sind, sodass die Stirnseitenflächen (30, 31) während des Mischvorgangs aufeinander abgleiten, ohne dass von den Mischzähnen (23, 24) Material abträgt und in das Mischgut gelangt.

9. Mischvorrichtung nach einem der vorgenannten Ansprüche 1 bis 8,
**dadurch gekennzeichnet,**
**dass** die Eintrittsöffnungen (17a, 17b) direkt in die Mischkammer (14) münden, wobei die Eintrittsöffnung (17b) zur Zufuhr der Härter-Komponente (B) zweifach vorgesehen ist, um eine redundante Belieferung des Mischgutes mit der Härter-Komponente (B) zu schaffen.

10. Mischvorrichtung nach einem der vorgenannten Ansprüche 1 bis 9,
**dadurch gekennzeichnet,**
**dass** der Rotorteil (19) endseitig Vorsprünge (22) aufweist, welche in die Eintrittsöffnung (17a) zur Zufuhr der Binder-Komponente (A) hineinragen und mit der Rotation des Rotorteils (19) mitrotieren, um die Thixotropie der Binder-Komponente (A) bereits im Zuführkanal der Eintrittsöffnung (17a) zu reduzieren.

11. Mischvorrichtung nach einem der vorgenannten Ansprüche 1 bis 10,
**dadurch gekennzeichnet,**
**dass** der Rotorteil (19) eine endseitig offene, hohlzylinderartige Ausnehmung (29) aufweist, in welche ein Kern geometrieangepasst einsetzbar ist, vermittels dessen der Rotorteil (19) antreibbar ist.

12. Mischvorrichtung nach Anspruch 11,
**dadurch gekennzeichnet,**
**dass** die Ausnehmung (29) vom Körper des Rotorteils (19) radial nach innen verlaufende Rastrippen (25) aufweist, welche in entsprechende Aussparungen im Kern einrasten, um das Antriebsdrehmoment zum Betrieb der Mischvorrichtung (1) vom rotatorisch angetriebenen Kern auf das Rotorteil (19) zu übertragen.

13. Mischvorrichtung nach einem der vorgenannten Ansprüche 1 bis 12,
**dadurch gekennzeichnet,**
**dass** der Rotorteil (19) Dichtlippen (26) aufweist, um die Mischkammer (14) zwischen dem Rotorteil (19) und dem Statorteil (16) abzudichten und ein Austreten von Mischgut zu verhindern.

14. Mischvorrichtung nach einem der vorgenannten Ansprüche 1 bis 13,
**dadurch gekennzeichnet,**
**dass** der Statorteil (16) zumindest eine tellerförmige Anformung (18) am Außenumfang aufweist, wobei zumindest eine tellerförmige Anformung (18) eine halbmondförmige Rastkontur (15) umfasst, in die beim Einsetzen der Mischvorrichtung (1) ein Stiftelement eingreift, um die radiale Position der Abgabeöffnung (21) im Statorteil (16) zu sichern.

15. Mischvorrichtung nach einem der vorgenannten Ansprüche 1 bis 14,
**dadurch gekennzeichnet,**
**dass** der Rotorteil (19) einen zylinderförmigen Lagerabschnitt (27) aufweist, um im Statorteil (16) zur radialen Lagerung eine Gleitlageranordnung zu schaffen.

16. Mischvorrichtung nach einem der vorgenannten Ansprüche 1 bis 15,
**dadurch gekennzeichnet,**
**dass** der Statorteil (16) eine Stützlagerfläche (12) umfasst, an welcher der Rotorteil (19) mit den an diesem angeformten Mischzähnen (24) stirnseitig anliegt und abgleitet, um eine axiale Gleitlageranordnung zu schaffen.

17. Mischvorrichtung nach einem der vorgenannten Ansprüche 13 bis 16,
**dadurch gekennzeichnet,**
**dass** zwischen den Dichtlippen (26) ein Hohlraum (28) ausgebildet ist, um ein Auffangen von durch die Dichtlippen (26) hindurchtretendem Mischgut zu ermöglichen.

18. Mischvorrichtung nach Anspruch 17,
**dadurch gekennzeichnet,**
**dass** der Statorteil (16) im zylindrischen Abschnitt des Hohlraumes (28) umfangsseitig zumindest eine Austrittsöffnung (13) aufweist, um ein Austreten von Mischgut seitens des zylinderförmigen Lagerabschnittes (27) zu verhindern.

19. Mischvorrichtung nach einem der vorgenannten Ansprüche 1 bis 18,
**dadurch gekennzeichnet,**
**dass** zumindest der Statorteil (16) aus einem transparenten Material gebildet ist, wobei das transparente Material aus der Gruppe der Kunststoffe, umfassend ein Polycarbonat (PC), ein Polymethylmetacrylat (PMMA) und /oder ein Styrol/Acrylnitril (SAN), ausgebildet ist.

20. Mischvorrichtung nach einem der vorgenannten Ansprüche 1 bis 19,
**dadurch gekennzeichnet,**
**dass** der Rotorteil (16) aus Polyoxymethylen (POM), Polyacetal und/oder Polyformaldehyd gebildet ist.

21. Mischvorrichtung nach einem der vorgenannten Ansprüche 1 bis 20,
**dadurch gekennzeichnet,**
**dass** die Abgabeöffnung (21) als radialer Auslass an einem Seitenwandabschhnitt des Statorteils (16) ausgeführt ist, wobei die Abgabeöffnung bevorzugt kreisförmig ausgeführt ist und/oder radial mit Bezug zur Normalen seitlich versetzt zu dieser auf der Mantelfläche des Statorteils (16) zur Seite weisend angeordnet ist.

22. Mischvorrichtung nach einem der vorgenannten Ansprüche 1 bis 21,
**dadurch gekennzeichnet,**
**dass** die Größe der Abgabeöffnung so dimensioniert ist, dass 100 g einer gebrauchsfertige Spachtelmasse im Wesentlichen in 10 s abgegeben werden.

23. Gerät (100) zur Herstellung einer gebrauchsfertigen Spachtelmasse für die Verspachtelung von Oberflächen, von beispielsweise Fahrzeugkarosserien, mit einer Mischvorrichtung (1) nach einem der vorgenannten Ansprüche 1 bis 22, mit wenigstens einer auf einer Tragplatte (104) angeordneten Aufnahme für einen Vorratsbehälter (90) einer Binderkomponente (A) und wenigstens einer auf einer Tragplatte angeordneten Aufnahme für einen Vorratsbehälter (91, 92) einer Härterkomponente (B, B1) und wenigstens jeweils einer einem Vorratesbehälter (90, 91, 92) zugeordneten und bevorzugt jeweils mit einem Hydraulikzylinder (110, 111, 112) verbundenen Kolbenstange, wobei ein Anbring- und Führungselement für die Kolbenstangen oberhalb der Vorratsbehälter (90, 91, 92) vorgesehen ist,
**dadurch gekennzeichnet,**
**dass** das Anbring- und Führungselement und die Kolbenstangen mit der Tragplatte (104) und dem Standfuß (190) des Gerätes zur Erhöhung der Gerätestabilität über säulenartige Streben (106, 107) verbunden sind, die auf gegenüberliegenden Seiten des Gerätes vorgesehen sind und die bevorzugterweise an ihren oberen freien Enden (106a, 107a) über eine Querstrebe (108) verbunden sind.

24. Gerät nach Anspruch 23,
**dadurch gekennzeichnet,**
**dass** der Standfuß (190) des Gerätes aus einem Doppel-T-Profil (191, 191 a) oder aus zwei parallel zueinander verlaufenden Holmen (192, 192a) besteht, die über das Gerät selbst miteinander verbunden sind.

25. Gerät nach einem der Ansprüche 23 oder 24,
**dadurch gekennzeichnet,**
**dass** wenigstens eine zu öffnende, bevorzugt transparente Schutzabdeckung (200) zur Abdeckung der Vorratsbehälter (90, 91, 92) vorgesehen ist, wobei besonders bevorzugt ein Schutzschalter in Wirkverbindung mit Schutzabdeckung (200) und dem Gerät (100) vorgesehen ist, der das Gerät (100) abschaltet, wenn die Schutzabdeckung geöffnet ist, die aus einem glasklaren Kunststoff oder einem anderen geeigneten Material besteht und türartig ausgebildet ist.
